# EUROPEAN PATENT SPECIFICATION

(11) **EP 3 107 022 B1**
(45) Date of publication and mention of the grant of the patent: **18.09.2019**
(21) Application number: 15749660.5
(22) Date of filing: 16.01.2015
(51) Int. Cl.: G06F 21/35, G06F 13/00, G06F 21/44, H04L 29/06, H04W 12/06, H04W 4/00

(54) **TERMINAL DEVICE, AUTHENTICATION INFORMATION MANAGEMENT METHOD, AND AUTHENTICATION INFORMATION MANAGEMENT SYSTEM**
ENDGERÄTEVORRICHTUNG, AUTHENTIFIZIERUNGSINFORMATIONSMANAGEMENTVERFAHREN UND AUTHENTIFIZIERUNGSINFORMATIONSMANAGEMENTSYSTEM
DISPOSITIF DE TERMINAL, PROCÉDÉ DE GESTION D'INFORMATIONS D'AUTHENTIFICATION ET SYSTÈME DE GESTION D'INFORMATIONS D'AUTHENTIFICATION

(30) Priority: 14.02.2014 JP 2014026867
(43) Date of publication of application: 21.12.2016
(73) Proprietor: NTT DOCOMO, INC., Chiyoda-ku Tokyo 100-6150 (JP)
(72) Inventor: SHIBUTANI Akira, Tokyo 100-6150 (JP); TANNO Tetsuhiro, Tokyo 100-6150 (JP); KOBAYASHI Shigeko, Tokyo 100-6150 (JP); HIGUCHI Yuuta, Tokyo 100-6150 (JP); SASAGAWA Tetsuhiro, Tokyo 100-6150 (JP)
(74) Representative: Viering, Jentschura & Partner mbB Patent- und Rechtsanwälte
(86) International application number: PCT/JP2015/051121
(87) International publication number: WO 2015/122235

(56) References cited:
- WO-A1-2013/100905
- JP-A- 2006 338 398
- JP-A- 2007 174 633
- JP-A- 2007 220 095
- US-A1- 2013 109 355
- US-A1- 2013 124 346
- YUSUKE KOWAKAME ET AL.: 'One-time Authentication System Using Near Field Communications and Mobile Phone' IEICE TECHNICAL REPORT vol. 111, no. 383, 12 January 2012, pages 91 - 95, XP008182603
- YUKI NAKAHARA ET AL.: 'Fixed and Mobile Authentication Interwork in Access-line and SIM-based authentication' PROCEEDINGS OF THE 2013 IEICE COMMUNICATION SOCIETY CONFERENCE 2 03 September 2013, page 35, XP008182602

## Description

### Technical Field

The present invention relates to a terminal device, an authentication information management method, and an authentication information management system.

### Background Art

Technology in which a wearable device (wearable computer) which is a terminal assumed to be mounted on a human body for use retains authentication information and transmits the authentication information to a device for performing authentication (for example, a POS system device or the like) is being investigated. For example, the wearable computer disclosed in Patent Literature 1 retains authentication information for accessing servers, and the wearable computer transmits the authentication information to a terminal device when the terminal device requests the wearable computer to provide the authentication information.

As a method of setting authentication information for a wearable device, there is a method of setting the authentication information for the wearable device according to an operation input for a terminal device (for example, a screen operation input of the terminal device) capable of performing predetermined communication (for example, short-range communication) with the wearable device or a method of presetting fixed authentication information for the wearable device before the wearable device is provided to the user.

US 2013/109355 describes a communication system including authorized electronic devices that proxy authentication and registration for one or more unauthenticated electronic devices. The unauthenticated electronic devices connect to the authenticated electronic device over a personal area network and initiate a communication session - via the authenticated electronic devices - with an authentication server located on a secure broadband wireless network that connects the one or more authenticated electronic devices. When the authentication server authorizes the unauthenticated electronic devices to access the secure broadband wireless network, network configuration data is communicated to the unauthenticated electronic devices via the authenticated electronic devices.

WO 2013/100905 describes a method and a system for extending distributed logon services to an off-line computing device includes encrypting, on the off-line computing device, a one-time password (OTP), a nonce, and a unique identifier to generate an authorization request message. Using a mobile device as a proxy to forward the authorization request message to an access control server for authorization. Decrypting the authorization response message to obtain the nonce. Re-encrypting the nonce to generate an authorization response message. Using the mobile device as a proxy to forward the authorization response message to the off-line computing device. Decrypting the authorization response message to obtain the nonce. Comparing the nonce obtained from the authorization response message with the original nonce. The computing device to permit or deny access as result of comparing the nonce obtained from the authorization response message with the original nonce.

### Citation List

### Patent Literature

[Patent Literature 1] Japanese Unexamined Patent Publication No. 2010-62824

### Summary of Invention

### Technical Problem

However, when the authentication information is set for the wearable device through an input operation on the terminal device, this places an operation burden on a user because the user is forced to input an operation.

Also, there is a problem in security when simple authentication information is input according to the user's operation. Also, when fixed authentication information is preset for the wearable device, there is also a problem in security in this regard because the authentication information is fixed.

The present invention has been made to solve the above-mentioned problems and an objective of the invention is to provide a terminal device, an authentication information management method, and an authentication information management system for securing a security level of authentication information while maintaining the convenience for a user.

### Solution to Problem

The present invention provides an authentication information management system as defined in claim 1.

In the authentication information management system according to the embodiments of the present invention, because the authentication information is received from the authentication server and the authentication information is transmitted to the short-range communication device using the fact that the terminal device can communicate with the short-range communication device and the terminal device can communicate with the authentication server as a trigger, the terminal device can automatically receive the authentication information from the authentication server and receive authentication information having a higher security level than authentication information easily input by a user of the terminal device.

That is, the authentication information management system can also secure a security level of the authentication information of the short-range communication device while maintaining convenience for the user.

Also, the authentication information management system according to the present invention may further include an update determination means configured to determine whether an update of the authentication information is necessary, wherein the authentication information generation means regenerates authentication information of the short-range communication device when the update determination means determines that the update is necessary. In this case, the authentication information management system can increase the security level of the authentication information of the short-range communication device more than when the authentication information of the short-range communication device is fixed because the authentication information of the short-range communication device is updated when it is determined that the update is necessary.

Also, in the authentication information management system according to the embodiment of the present invention, the update determination means may determine that the update of the authentication information is necessary when the authentication information is not updated for a fixed period. In this case, the authentication information management system can cause the authentication information of the short-range communication device to be updated each predetermined period because it is determined that the update is necessary when the authentication information is not updated for the fixed period and the authentication information is updated according to the determination. Thereby, the authentication information management system can increase the security level of the authentication information of the short-range communication device more than when the authentication information of the short-range communication device is fixed.

Also, the authentication information management system according to the embodiment of the present invention may further include a fraud detection means configured to detect misuse of the authentication information, wherein the update determination means determines that it is necessary to update the authentication information when the fraud detection means detects the misuse. In this case, the authentication information management system can update the authentication information of the short-range communication device when there is misuse because it is determined that the update is necessary when the misuse of the authentication information is detected. Thereby, the authentication information management system can secure the security level of the authentication information of the short-range communication device.

Also, in the authentication information management system according to the embodiment of the present invention, the authentication information transmission means may transmit line authentication information which is authentication information of a line for use in communication between the terminal device and the authentication server and an identifier of the short-range communication device or an identifier of a subscriber authentication module mounted on the short-range communication device as the identification information corresponding to the short-range communication device to the authentication server, the authentication server may further include a transmission possibility determination means configured to determine whether the authentication information can be transmitted on the basis of the line authentication information and the identifier of the short-range communication device or the identifier of the subscriber authentication module mounted on the short-range communication device, and it may be determined whether the update of the authentication information is necessary when the transmission possibility determination means determines that the transmission is possible. In this case, the authentication information management system can prevent the authentication information of the short-range communication device from being updated after the information of the short-range communication device is fraudulently acquired because the authentication server determines whether the authentication information of the short-range communication device can be updated on the basis of the line authentication information and the identifier of the short-range communication device or the identifier of the subscriber authentication module mounted on the short-range communication device. Thereby, the authentication information management system can secure the security level of the authentication information of the short-range communication device.

Also, in the authentication information management system according to the embodiment of the present invention, the terminal device may further include an association information transmission means configured to transmit association information which is information indicating association of the line authentication information and the identifier of the short-range communication device or the identifier of the subscriber authentication module mounted on the short-range communication device to the authentication server, the authentication server may further include an association information reception means configured to receive the association information, and the transmission possibility determination means may determine that transmission is possible if the association information is received by the association information reception means when the line authentication information and the identifier of the short-range communication device or the identifier of the subscriber authentication module mounted on the short-range communication device are not associated. In this case, the authentication information management system can prevent the authentication information from being fraudulently updated because the authentication server receives the information in which the line authentication information and the identifier of the short-range communication device or the identifier of the subscriber authentication module mounted on the short-range communication device are associated from the terminal device when the line authentication information and the identifier of the short-range communication device or the identifier of the subscriber authentication module mounted on the short-range communication device are not associated. Thereby, the authentication information management system can secure the security level of the authentication information of the short-range communication device.

Also, in the authentication information management system according to the embodiment of the present invention, the authentication server may further include an information retention means configured to retain information obtained by associating the line authentication information and the identifier of the short-range communication device or the identifier of the subscriber authentication module mounted on the short-range communication device when the update possibility determination means receives the association information of the line authentication information and the identifier of the short-range communication device or the identifier of the subscriber authentication module mounted on the short-range communication device from the terminal device, and the transmission possibility determination means may determine that the transmission is possible when the information retention means retains the information obtained by associating the line authentication information and the identifier of the short-range communication device or the identifier of the subscriber authentication module mounted on the short-range communication device if the line authentication information and the identifier of the short-range communication device or the identifier of the subscriber authentication module mounted on the short-range communication device are not associated.

In this case, in the authentication information management system, because the authentication server retains association information obtained by associating the line authentication information and the identifier of the short-range communication device or the identifier of the subscriber authentication module mounted on the short-range communication device when the line authentication information and the identifier of the short-range communication device or the identifier of the subscriber authentication module mounted on the short-range communication device are associated (for example, for the same user or the like) even when a result of comparing the line authentication information and the identifier of the short-range communication device or the identifier of the subscriber authentication module mounted on the short-range communication device indicates that there is no association, it is unnecessary to ask the terminal device whether the line authentication information and the identifier of the short-range communication device or the identifier of the subscriber authentication module mounted on the short-range communication device are associated during subsequent update possibility determination. Thereby, the authentication information management system can efficiently update the authentication information.

### Advantageous Effects of Invention

According to an embodiment of the present invention, it is possible to provide a terminal device, an authentication information management method, and an authentication information management system for securing a security level of authentication information while maintaining convenience for a user.

### Brief Description of Drawings

FIG. 1 is a schematic diagram of an authentication information management system according to an embodiment of the present invention.
FIG. 2 is a block diagram of an authentication information management system according to an embodiment of the present invention.
FIG. 3 is a diagram illustrating a functional block of an authentication information management system according to an embodiment of the present invention.
FIG. 4 is a diagram illustrating a hardware configuration of a mobile device 10.
FIG. 5 is a diagram illustrating a hardware configuration of an authentication server 20.
FIG. 6 is a diagram illustrating a hardware configuration of a wearable device 30.
FIG. 7 is a sequence diagram of a process of registering authentication information.
FIG. 8 is a sequence diagram of a periodic process of updating periodic authentication information.
FIG. 9 is a sequence diagram of a process of updating authentication information when fraud detection is performed.
FIG. 10 is a block diagram of an authentication information management system of a modified example.
FIG. 11 is a block diagram of an authentication information management system of a modified example.

### Description of Embodiments

Hereinafter, embodiments of the present invention will be described in detail with reference to the accompanying drawings. Also, the same or like elements will be denoted by the same reference symbols throughout the description of the drawings, without redundant description.

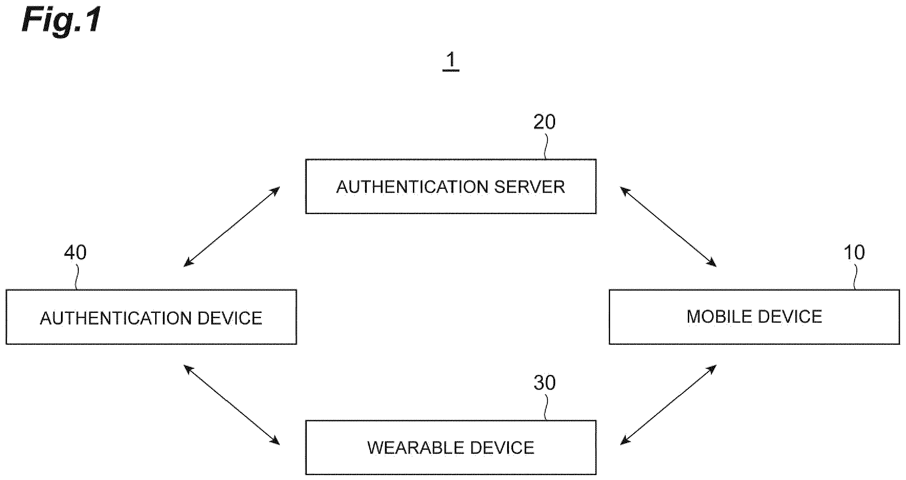

An authentication information management system 1 according to the embodiment of the present invention is illustrated in FIG. 1. The authentication information management system 1 is configured to include a mobile device 10 (a terminal device), an authentication server 20, a wearable device 30 (a short-range communication device), and an authentication device 40. The mobile device 10 and the wearable device 30 can communicate with each other through short-range communication. The authentication server 20 and the mobile device 10 communicate with each other through mobile communication (communication other than short-range communication, specifically, for example, mobile communication such as 3G or LTE). When communication by the mobile communication is performed, a facility of a mobile communication network such as a base station is used for the communication. The wearable device 30 and the authentication device 40 can communicate with each other through short-range communication. The authentication device 40 and the authentication server 20 can communicate with each other through a communication method (for example, a communication method via a communication network serving as a backbone such as the Internet) other than the short-range communication such as wired communication.

Specifically, the mobile device 10 is a portable phone or the like including a smartphone. The authentication server 20 is a server device which generates and retains authentication information to be used by the wearable device 30 to be authenticated (information to be used for the wearable device 30 to be authenticated by the authentication device 40, for example, information of a set of an ID and a password, information of only a password, or the like) and performs an authentication process according to an authentication request from the authentication device 40. The authentication process mentioned here is a process of comparing the authentication information transmitted from the wearable device 30 to the authentication server 20 via the authentication device 40 with the authentication information retained by the authentication server 20 and outputting a comparison result (a result indicating whether the authentication information is valid). This output is performed for, for example, the authentication device 40. The authentication server 20 is included in a mobile communication network (packet switching (PS) network) and can find information capable of being found in the mobile communication network. The authentication server 20 is provided by, for example, a communication provider of the mobile communication network.

The wearable device 30 is a device capable of being mounted by the user. Specifically, it is only necessary for the wearable device 30 to have a short-range communication function as a function of inputting/outputting information from/to the outside and it is unnecessary to have a screen display function, a sound output function, an operation input reception function, etc. However, these functions may be provided. As a specific form of the wearable device 30, any form capable of being mounted by the user such as a ring type or a wristwatch type can be provided. In general, the user of the mobile device 10 and the user of the wearable device 30 are the same person. As a specific example of the authentication device 40, there is a POS terminal or the like having an application capable of performing POS cash register business (credit settlement, sales management, or the like). The authentication device 40 receives the authentication information from the wearable device 30, transmits the authentication information to the authentication server 20, issues an authentication request to the authentication server 20, and provides a service to the wearable device 30 when a result indicating that the authentication information is valid is obtained from the authentication server 20. As a service when the authentication device 40 is a POS terminal, there is a credit settlement process or the like.

In the authentication information management system 1, when the mobile device 10 can communicate with the authentication server 20 and the mobile device 10 can also communicate with the wearable device 30, the mobile device 10 requests the authentication server 20 to transmit the authentication information, the mobile device 10 receives the authentication information generated by the authentication server 20 and transmits the authentication information to the wearable device 30, and the wearable device 30 retains the received authentication information.

The wearable device 30 transmits the authentication information to the authentication device 40, the authentication device 40 issues an authentication request (a determination request for validity of the authentication information) to the authentication server 20, and the authentication device 40 provides a service when information indicating that the authentication information is valid is received from the authentication server 20.

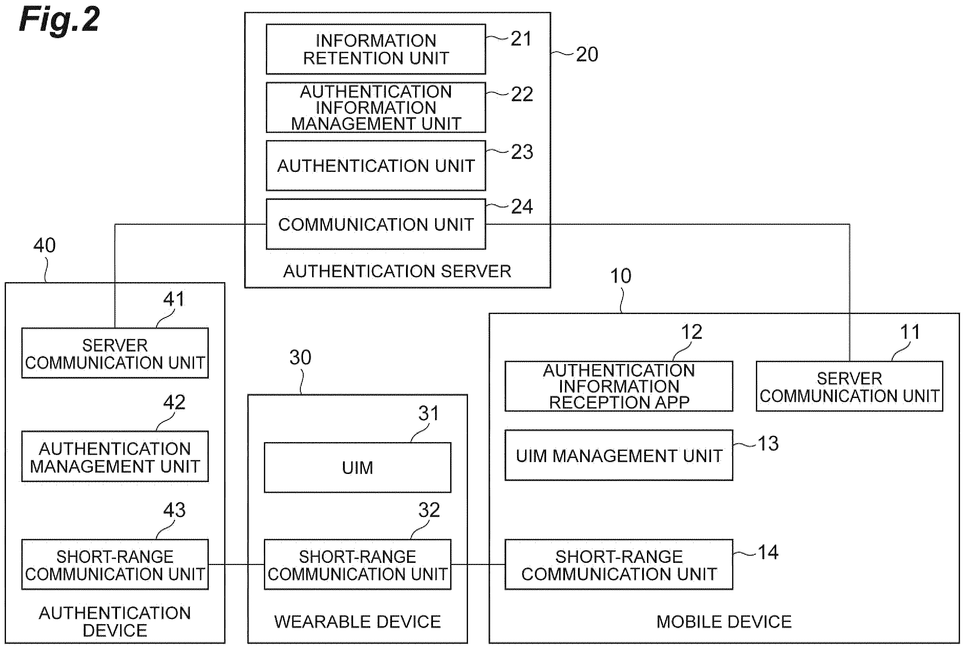

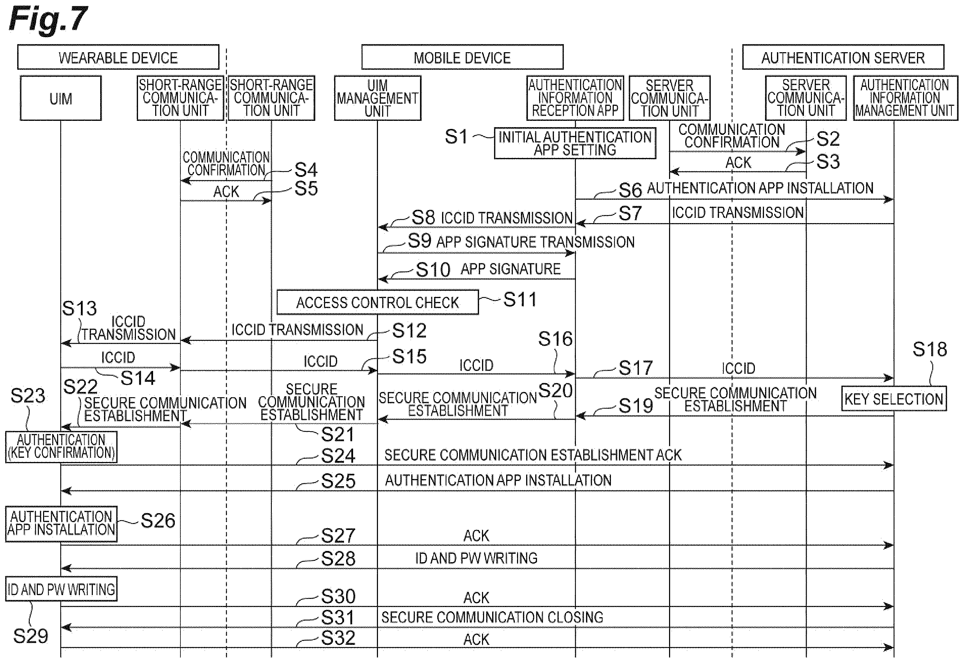

Next, a block diagram of the authentication information management system 1 is illustrated in FIG. 2 and overviews of blocks will be described. Also, a detailed process will be described in the description of sequence diagrams (FIGS. 7 to 9). As illustrated in FIG. 2, the mobile device 10 includes a server communication unit 11, an authentication information reception app (authentication information reception application) 12, a UIM management unit 13, and a short-range communication unit 14.

The server communication unit 11 is a communication interface for communicating with the authentication server 20 through mobile communication. Also, the server communication unit 11 also includes a communication control means for controlling a process of determining a state of communication with the authentication server 20. Also, line information stored in a user identity module (UIM) or the like is necessary to perform mobile communication. The mobile device 10 in the present embodiment does not store the UIM. However, the server communication unit 11 can perform the mobile communication using the information stored in the UIM 31 stored in the wearable device 30 as will be described below.

The UIM is an authentication device which specifies the user when the mobile communication is performed. In general, the communication provider of the mobile communication network lends a line user of the mobile communication network one device per line. At the time of lending, the communication provider of the mobile communication network manages a number (ICCID) of a UIM, a key for the ICCID, etc., in the authentication server 20. In the UIM, a secure element may be mounted. The secure element is designed to withstand a malicious analysis attack from the outside and is a memory securely storing data or a part in which a cipher logic circuit (function) is embedded. Also, the secure element can be mounted within a mobile device, an SD card, etc. as well as the UIM. An ICCID is also assigned to the secure element. When the secure element is within the UIM, the ICCID of the UIM and the ICCID of the secure element can be the same as each other.

The authentication information reception app 12 (a UI app) is an application which provides a user interface for receiving an authentication information transmission request to the authentication server 20 and issuing an authentication information transmission request to the authentication server 20 via the server communication unit 11. The authentication information reception app 12 has an application signature indicating that information of the UIM can be received, outputs the application signature according to an application signature transmission request from the UIM management unit 13, and receives authentication of whether the information of the UIM 31 can be received. The authentication information reception app 12 receives an update input operation for the authentication information via the user interface and performs update confirmation for the authentication server 20 via the server communication unit 11 when the update input operation is received. When an update instruction is received from the authentication server 20, the authentication information reception app 12 issues a transmission request for updated authentication information via the server communication unit 11.

The UIM management unit 13 is a part which issues various types of requests (for example, a transmission request for identification information which is unique information retained by the UIM 31) to the UIM 31 which is the UIM 31 mounted on the wearable device 30. Here, the UIM 31 is an IC card for retaining line information (for example, an international mobile subscriber identity (IMSI) or the like) necessary for the mobile device 10 to perform mobile communication, a phone number, or the like. The UIM management unit 13 also performs access control of a request (for example, a transmission request for an IC card identifier (ICCID) which is unique information for each IC card) from the authentication information reception app 12. That is, the UIM management unit 13 determines whether the information of the UIM 31 should be transmitted to the authentication information reception app 12. Specifically, the UIM management unit 13 determines whether the authentication information reception app 12 is an application capable of receiving the information of the UIM 31 of the wearable device 30 by confirming an application signature received from the authentication information reception app 12. Although the mobile device 10 is not a configuration having the UIM in the present embodiment, the UIM management unit 13 may issue various types of requests to the UIM of the mobile device 10 when the UIM is provided.

The short-range communication unit 14 is a communication interface for performing short-range communication, for example, Bluetooth (registered trademark) low energy (BLE) or near field communication (NFC). The short-range communication unit 14 is connected to the wearable device 30 and transmits and receives information to and from the wearable device 30. Specifically, the short-range communication unit 14 receives the ICCID from the wearable device 30 and transmits the authentication information generated by the authentication server 20 to the wearable device 30. Also, the short-range communication unit 14 also includes a communication control means for controlling a state of communication with the wearable device 30.

Next, the authentication server 20 will be described. The authentication server 20 includes an information retention unit 21, an authentication information management unit 22, an authentication unit 23, and a communication unit 24. The information retention unit 21 is a part which associates and retains various types of information such as authentication information (identification information (ID) for receiving the service and a password for receiving the service) and information (authentication-related information) related thereto. Specifically, the information retention unit 21 retains information in which subscriber information (a phone number, etc.), line information of a line to be used during communication between the authentication server 20 and the mobile device 10, and identification information (ICCID) of an IC card such as the UIM 31 are associated with the authentication information. This information is input to (registered in) the authentication server by a communication provider or the like of the mobile communication network in advance.

Also, when the ICCID corresponding to the line information related to the mobile device 10 does not match the ICCID retained by the UIM 31 transmitted by the mobile device 10, the information retention unit 21 retains information in which the line information related to the mobile device 10 and the ICCID retained by the UIM 31 transmitted by the mobile device 10 are associated. Also, because the mobile device 10 communicates with the authentication server 20 using information stored in the UIM 31 of the wearable device 30 in the case of the configuration illustrated in FIG. 2, the ICCID corresponding to the line information related to the mobile device 10 matches the ICCID retained by the UIM 31 transmitted by the mobile device 10. A configuration in which the ICCID corresponding to the line information related to the mobile device 10 does not match the ICCID retained by the UIM 31 transmitted by the mobile device 10 will be described below.

Also, the information retention unit 21 retains information for specifying authentication information for which misuse is detected (for example, information obtained by associating misuse flag information with the authentication information). Further, the information retention unit 21 retains key information for each ICCID to perform secure communication. Further, the information retention unit 21 retains a Java (registered trademark) applet for the authentication information management. Here, the Java applet for the authentication information management is a program capable of executing registration and external transmission of authentication information. When the Java applet for the authentication information management is installed on the wearable device 30, the wearable device 30 enables the registration of the authentication information for the wearable device 30 and the transmission of the authentication information for the authentication device 40.

The authentication information management unit 22 generates the authentication information in response to the authentication information transmission request from the mobile device 10 and transmits the authentication information to the mobile device 10 via the communication unit 24. Also, the authentication information management unit 22 may be configured to pre-generate the authentication information before an authentication information transmission request from the mobile device 10.

Also, the authentication information management unit 22 determines whether it is necessary to update the authentication information when update confirmation of the authentication information is received from the mobile device 10 and notifies the mobile device 10 of a determination result (the presence/absence of necessity of an update) via the communication unit 24. When the update request is received from the mobile device 10 after the notification indicating that it is necessary to update the authentication information (the update instruction), the authentication information management unit 22 updates (re-generates) the authentication information and the communication unit 24 to be described below transmits the authentication information to the mobile device 10.

Also, the authentication information management unit 22 determines whether to transmit the authentication information to the mobile device 10 using line information to be used during line authentication. Specifically, the authentication information management unit 22 receives the line information retained by the UIM 31 via the communication unit 24 during mobile communication with the mobile device 10 using well-known technology. The authentication information management unit 22 specifies the ICCID corresponding to the received line information by referring to authentication-related information retained by the information retention unit 21. The authentication information management unit 22 compares the ICCID specified on the basis of the line information with the ICCID retained by the UIM 31 transmitted by the mobile device 10 and permits the transmission of the authentication information to the mobile device 10 when the ICCIDs match. Also, even when a result of comparing the ICCID specified on the basis of the line information with the ICCID retained by the UIM 31 transmitted by the mobile device 10 indicates that the ICCIDs do not match, the authentication information management unit 22 permits the transmission of the authentication information to the mobile device 10 when information (for example, generated authentication information) indicating that the ICCID specified from the line information and the ICCID retained by the UIM 31 transmitted by the mobile device 10 are associated is received.

The authentication unit 23 performs an authentication process by comparing the authentication information received from the authentication device 40 with the authentication information retained by the authentication server 20. Specifically, the authentication unit 23 outputs a comparison result after comparing the authentication information acquired from the authentication device 40 with the authentication information retained by the authentication server 20 as the authentication process.

The communication unit 24 is a part which communicates with the mobile device 10 and the authentication device 40, and is specifically a communication interface. The communication unit 24 receives an authentication information transmission request from the mobile device 10 and receives an authentication request from the authentication device 40. Also, the communication unit 24 transmits the authentication information to the mobile device 10 in response to the authentication information transmission request and transmits a result of the authentication process to the authentication device 40.

The wearable device 30 includes the UIM 31 and the short-range communication unit 32. The UIM 31 is a part which retains the ICCID and retains the authentication information. Specifically, after the Java applet for authentication information management is received from the authentication server 20 via the mobile device 10, the authentication information received from the authentication server 20 is stored in a storage means within the UIM 31 via the mobile device 10 using the Java applet for the authentication information management. Also, key information (for example, shared key information) for securely communicating with the authentication server 20 via the mobile device 10 is retained in the UIM 31.

The short-range communication unit 32 is a communication interface which performs short-range communication, for example, BLE or NFC. The short-range communication unit 32 establishes a communication connection to the mobile device 10 or the authentication device 40 and performs transmission/reception of information to/from the mobile device 10 or the authentication device 40. Specifically, the short-range communication unit 32 receives the authentication information from the mobile device 10, transmits the ICCID to the mobile device 10, and transmits the authentication information to the authentication device 40. Also, the short-range communication unit 32 may set the same method or different methods as a method of communicating with the mobile device 10 and a method of communicating with the authentication device 40. For example, in the case of communication with the mobile device 10 through BLE, the short-range communication unit 32 may communicate with the authentication device 40 through BLE or may communicate with the authentication device 40 through NFC.

The authentication device 40 includes a server communication unit 41, an authentication management unit 42, and a short-range communication unit 43. The server communication unit 41 is a communication interface for communicating with the authentication server 20. The server communication unit 41 transmits the authentication information received from the wearable device 30 to the authentication server 20.

The authentication management unit 42 transmits the authentication information received from the wearable device 30 via the short-range communication unit 43 to the authentication server 20 via the server communication unit 41 and determines whether to provide a service on the basis of an authentication result from the authentication server 20.

The short-range communication unit 43 is a communication interface which performs short-range communication, for example, BLE or NFC. The short-range communication unit 43 is connected to the wearable device 30 and receives the authentication information from the wearable device 30.

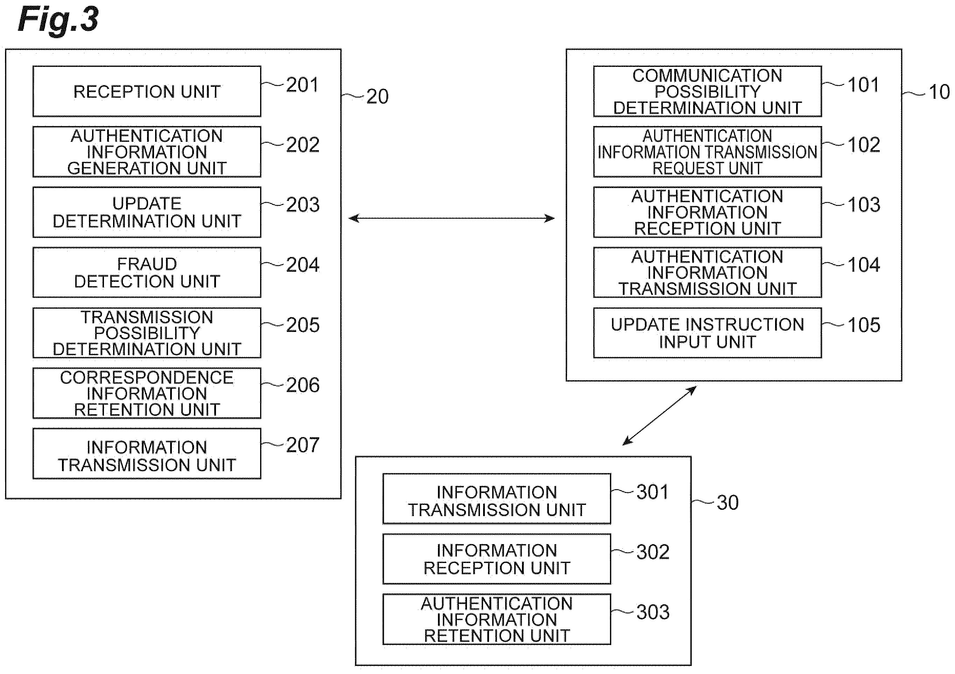

Next, a functional block diagram of the mobile device 10, the authentication server 20, and the wearable device 30 is illustrated in FIG. 3. As illustrated in FIG. 3, the mobile device 10 includes a communication possibility determination unit 101 (a communication possibility determination means), an authentication information transmission request unit 102 (an authentication information transmission request means), an authentication information reception unit 103 (a terminal-device authentication information reception means), an authentication information transmission unit 104 (a terminal-device authentication information transmission means), and an update instruction input unit 105 (an update instruction input means).

The communication possibility determination unit 101 determines whether the mobile device 10 can communicate with the wearable device 30 and determines whether the mobile device 10 can communicate with the authentication server 20. Specifically, as the communication possibility determination unit 101, the server communication unit 11 transmits a signal for requesting communication confirmation to the authentication server 20 through the mobile communication. Next, as the communication possibility determination unit 101, the server communication unit 11 determines that the mobile device 10 can communicate with the authentication server when a control signal indicating a response (ACK) for the signal is received from the authentication server 20. Alternatively, if communication with the authentication server 20 is possible when a connection to the mobile communication network is established, the communication possibility determination unit 101 may determine that the mobile device 10 can communicate with the authentication server 20 when the server communication unit 11 is connected to the mobile communication network (connected to the mobile communication network (mobile communication line)). Also, specifically, as the communication possibility determination unit 101, the short-range communication unit 14 determines whether a short-range wireless link with the wearable device 30 is established. Alternatively, the short-range communication unit 14 may determine whether communication with the wearable device 30 is possible on the basis of a control signal indicating a response in communication with the wearable device 30. Also, the short-range communication unit 14 may determine whether communication with the wearable device 30 is possible on the basis of a radio wave intensity or a signal to noise ratio (SNR) during communication with the wearable device 30.

When the communication possibility determination unit 101 determines that communication between the mobile device 10 and the wearable device 30 is possible and determines that communication between the mobile device 10 and the authentication server 20 is possible, the authentication information reception app 12 transmits identification information corresponding to the wearable device 30 to the authentication server 20 and requests the authentication server 20 to transmit the authentication information stored in the wearable device 30, thereby implementing the authentication information transmission request unit 102. That is, the authentication information reception app 12 requests the authentication server 20 to transmit authentication information (an ID and a password). Also, the UIM management unit 13 acquires the ICCID as the identification information corresponding to the wearable device 30 from the UIM 31 and the authentication information reception app 12 transmits the ICCID to the authentication server 20. Also, the authentication information transmission request unit 102 may be configured to transmit identification information corresponding to the wearable device 30 to the authentication server 20 and request the authentication server 20 to transmit authentication information stored in the wearable device 30 after pre-confirming that the authentication information to be registered by the wearable device 30 is not stored when the authentication information is newly registered as the case in which the communication possibility determination unit 101 determines that communication between the mobile device 10 and the wearable device 30 is possible and determines that communication between the mobile device 10 and the authentication server 20 is possible.

The authentication information reception unit 103 receives authentication information from the authentication server 20 in response to a transmission request from the authentication information transmission request unit 102. Specifically, the authentication information reception app 12 receives authentication information via the server communication unit 11, thereby implementing the authentication information reception unit 103.

The authentication information transmission unit 104 transmits the authentication information received by the authentication information reception unit 103 to the wearable device 30. Specifically, the short-range communication unit 14 receives the authentication information from the authentication information reception app 12 and transmits the authentication information to the wearable device 30, thereby implementing the authentication information transmission unit 104.

The update instruction input unit 105 inputs an instruction for updating the authentication information retained by the UIM 31. Specifically, when the mobile device 10 receives a notification indicating that update is necessary as a result of the mobile device 10 confirming whether the update is necessary for the authentication server 20, the authentication information reception app 12 inputs an instruction for updating the authentication information according to the notification, thereby implementing the update instruction input unit 105. For example, the confirmation of whether the update is necessary is performed at the timing preset in the mobile device 10. Also, when the update instruction input unit 105 inputs the instruction for updating the authentication information, the authentication information transmission request unit 102 requests the authentication server 20 to transmit the authentication information.

The authentication server 20 includes a reception unit 201 (a reception means), an authentication information generation unit 202 (an authentication information generation means), an update determination unit 203 (an update determination means), a fraud detection unit 204 (a fraud detection means), a transmission possibility determination unit 205 (a transmission possibility determination means), a correspondence information retention unit 206 (an information retention means), and an information transmission unit 207 (an authentication-server authentication information transmission means).

The reception unit 201 receives an ICCID of the wearable device 30 (an ICCID retained by the UIM 31) from the mobile device 10 and receives an authentication information transmission request from the mobile device 10. Specifically, the authentication information management unit 22 receives the authentication information transmission request from the mobile device 10 via the communication unit 24, thereby implementing the reception unit 201.

When the reception unit 201 receives the authentication information transmission request from the mobile device 10, the authentication information generation unit 202 generates the authentication information of the wearable device 30. Similar to a conventional process, a process of generating the authentication information of the wearable device 30 may be performed. Specifically, the authentication information management unit 22 generates the authentication information using a random number, thereby implementing the authentication information generation unit 202. Also, the authentication information generation unit 202 registers the generated authentication information as the authentication information of authentication-related information in the information retention unit 21.

The update determination unit 203 determines whether it is necessary to update the authentication information. Specifically, the authentication information management unit 22 determines whether a preset predetermined time has elapsed after generation or transmission of the authentication information in response to an update confirmation request from the mobile device 10, determines whether misuse of the authentication information is detected by referring to presence/absence of information indicating misuse registered by the fraud detection unit 204 to be described below (for example, misuse flag information), and determines whether the number of authentications exceeds a predetermined threshold value (a value predefined by the update determination unit 203), thereby implementing the update determination unit 203.

The fraud detection unit 204 detects the misuse of the authentication information. Specifically, the authentication information management unit 22 receives the information of the misuse from the authentication device 40 or detects that the number of authentication failures exceeds a threshold value preset by the authentication server 20, thereby implementing the fraud detection unit 204. Also, when the authentication information management unit 22 detects the misuse of the authentication information as the fraud detection unit 204, information indicating the misuse for the authentication information is registered in the information retention unit 21.

The transmission possibility determination unit 205 determines whether the authentication information can be transmitted on the basis of information (line information) for line authentication in a mobile communication line related to the UIM 31 and an identifier of a subscriber authentication module (the UIM 31) mounted on the wearable device 30. Specifically, after the communication unit 24 receives the line information and the identifier (ICCID) of the UIM 31 mounted on the wearable device 30 from the mobile device 10, the authentication information management unit 22 determines whether the authentication information can be transmitted by comparing the ICCID based on the line information with the identifier of the UIM 31 mounted on the wearable device 30, thereby implementing the transmission possibility determination unit 205. Specifically, when the above-mentioned ICCIDs match or are pre-stored as those mutually associated in the correspondence information retention unit 206, transmission of the authentication information is determined. When transmission of the authentication information is determined, the transmission possibility determination unit 205 notifies the information transmission unit 207 of the determination and causes the information transmission unit 207 to execute the transmission. When transmission of the authentication information is not determined, the transmission possibility determination unit 205 notifies the information transmission unit 207 of the determination and causes the transmission to be prohibited.

Here, the ICCID based on the line information is referred to as an ICCID corresponding to the line information specified from authentication information retained by the information retention unit 21 and information related to the authentication information. Also, the transmission possibility determination unit 205 determines the possibility of transmission at any timing until the authentication information is generated after the identifier (ICCID) of the UIM 31 mounted on the wearable device 30 is received.

Also, the ICCID of the UIM 31 mounted on the wearable device 30 is used in the above-mentioned determination. However, for example, when the UIM 31 is not mounted on the wearable device 30, the identifier of the wearable device 30 (for example, the ICCID of the secure element included in the wearable device 30) may be used in place of the ICCID of the UIM 31. In this case, the ICCID of the wearable device 30 is transmitted from the mobile device 10 to the authentication server 20 in place of the ICCID of the UIM 31 (hereinafter the same is true).

The correspondence information retention unit 206 retains information obtained by associating the line information output by the mobile device 10 and the ICCID retained by the UIM 31 transmitted by the mobile device 10 when the ICCID corresponding to the line information output by the mobile device 10 does not match the ICCID retained by the UIM 31 transmitted by the mobile device 10. When the ICCID corresponding to the line information output by the mobile device 10 does not match the ICCID retained by the UIM 31 transmitted by the mobile device 10, the information retention unit 21 retains information obtained by associating the line information output by the mobile device 10 and the ICCID retained by the UIM 31 transmitted by the mobile device 10, thereby implementing the correspondence information retention unit 206.

The information transmission unit 207 transmits authentication information generated by the authentication information generation unit 202 to the mobile device 10. The communication unit 24 transmits the authentication information generated by the authentication information management unit 22 to the mobile device 10, thereby implementing the information transmission unit 207.

The wearable device 30 includes an information transmission unit 301 (a short-range-communication-device information transmission means), an information reception unit 302 (a short-range-communication-device authentication information reception means), and an authentication information retention unit 303 (an authentication information retention means). The information transmission unit 301 transmits the identification information corresponding to the wearable device 30 to the mobile device 10. Specifically, the information transmission unit 301 is implemented by transmitting an ICCID which is an identifier corresponding to the wearable device 30 to the short-range communication unit 43.

The information reception unit 302 receives authentication information from the mobile device 10. Specifically, the short-range communication unit 43 receives the authentication information from the mobile device 10, thereby implementing the information reception unit 302.

The authentication information retention unit 303 retains the authentication information received by the information reception unit 302. Specifically, a storage means (a memory or the like) provided in the UIM 31 retains the authentication information, thereby implementing the authentication information retention unit 303.

### (Description of hardware configuration diagram)

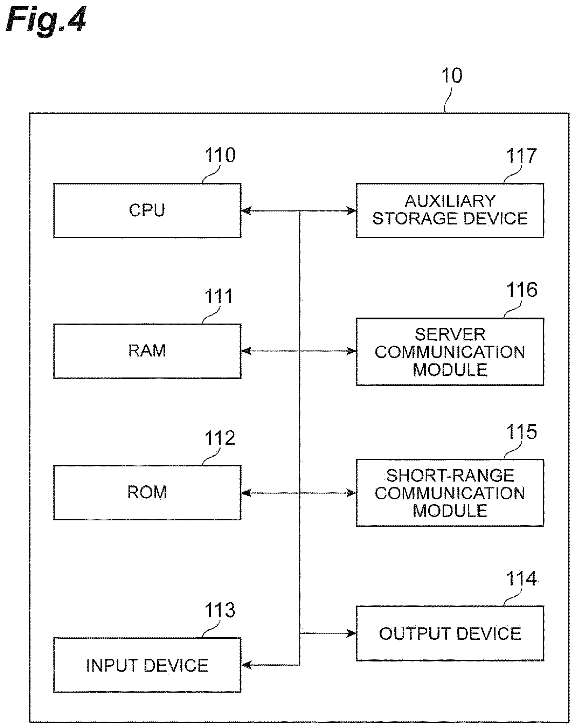

A hardware configuration diagram of the mobile device 10 will be described. As illustrated in FIG. 4, the mobile device 10 is configured as a computer system including one or more CPUs 110, a RAM 111 and a ROM 112 which are main storage devices, input devices 13 such as a keyboard and a mouse, an output device 114 such as a display, a short-range communication module 115 which is a communication module for short-range communication such as NFC or BLE, a server communication module 116 which is a module for communicating with the authentication server 20 and is a data transmission/reception device such as a network card, an auxiliary storage device 117 such as a semiconductor memory, etc. The mobile device 10 is implemented by causing predetermined computer software to be read on hardware such as the CPU 110 and the RAM 111 illustrated in FIG. 4, causing the input devices 113, the output device 114, the short-range communication module 115, and the server communication module 116 to operate under control of the CPU 110, and reading and writing data in the RAM 111 or the auxiliary storage device 117.

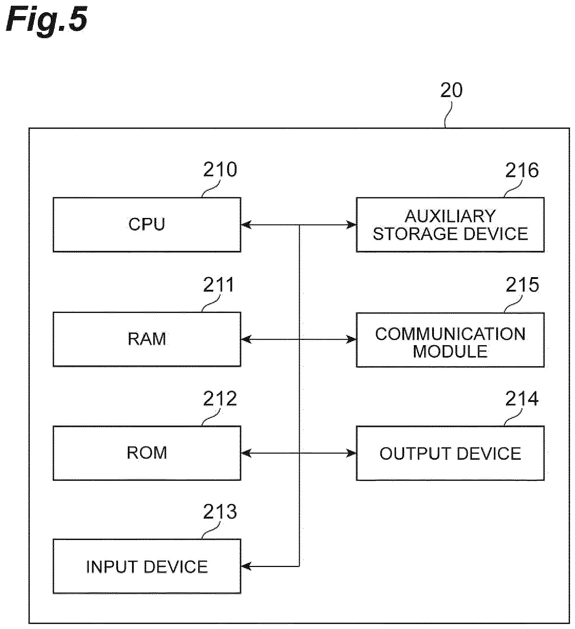

Next, a hardware configuration diagram of the authentication server 20 will be described. As illustrated in FIG. 5, the authentication server 20 is configured as a computer system including one or more CPUs 210, a RAM 211 and a ROM 212 which are main storage devices, input devices 213 such as a keyboard and a mouse, an output device 214 such as a display, a communication module 215 which is a data transmission/reception device such as a network card, an auxiliary storage device 217 such as a semiconductor memory, etc. The authentication server 20 is implemented by causing predetermined computer software to be read on hardware such as the CPU 210 and the RAM 211 illustrated in FIG. 5, causing the input devices 213, the output device 214, and the communication module 215 to operate under control of the CPU 210, and reading and writing data in the RAM 211 or the auxiliary storage device 216.

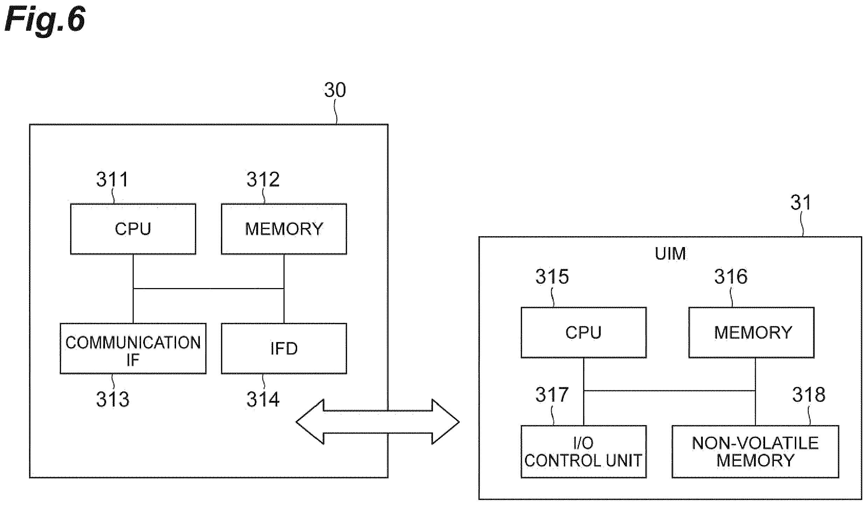

Next, a hardware configuration diagram of the wearable device 30 will be described. As illustrated in FIG. 6, the wearable device 30 is physically constituted of, for example, a CPU 311, a memory 312 such as a ROM or a RAM, a communication interface (IF) 313 for communicating with the outside, and an interface device (IFD) for exchanging data with the UIM 31.

Also, the UIM 31 is physically constituted of, for example, a CPU 315, a memory 316 such as a ROM or a RAM, a non-volatile memory 318 such as an EEPROM, and an I/O control unit 317 which controls the exchange of data with the wearable device 30. The non-volatile memory 318 of the UIM 31 is provided with a key candidate storage region for storing key candidates allocated to a public key and a private key.

Next, a process and an operation to be executed by the authentication information management system 1 according to the present embodiment will be described using sequence diagrams of FIGS. 7 to 9. The sequence diagram illustrated in FIG. 7 is a sequence diagram of a process of newly registering the authentication information in the wearable device 30.

Here, when initial settings of a Java applet (authentication app) for authentication information management received from the authentication server 20 (for example, selection of a type of service by the authentication device 40 desired to be received through authentication and designation of a user ID) are performed according to the user's input operation or the like via the user interface provided by the authentication information reception app 12 in the mobile device 10 (step S1), the server communication unit 11 of the mobile device 10 transmits a signal for requesting the communication unit 24 of the authentication server 20 to confirm communication (step S2: communication possibility determination step) and receives an ACK from the authentication server 20 (step S3: communication possibility determination step), so that the server communication unit 11 determines that communication with the authentication server 20 is possible. The short-range communication unit 14 of the mobile device 10 transmits a signal for requesting the short-range communication unit 32 of the wearable device 30 to confirm communication (step S4: communication possibility determination step) and the short-range communication unit 14 of the mobile device 10 receives an ACK from the short-range communication unit 32 of the wearable device 30 (step S5: communication possibility determination step), so that the short-range communication unit 14 of the mobile device 10 determines that communication with the mobile device 10 is possible. The authentication information reception app 12 transmits a type of service and a user ID input in step S1 to the authentication server 20 via the server communication unit 11 as the authentication information transmission request and issues an installation request for the authentication app (step S6: authentication information transmission request step). Also, this request may be used to confirm the information of the ICCID of the wearable device 30 and the presence/absence and version of the authentication app in the wearable device 30. In response to this request, the authentication information management unit 22 of the authentication server 20 receives the type of service and the user ID via the communication unit 24 and receives an installation request for the authentication app (reception step).

In response to the installation request for the authentication app, the authentication information management unit 22 of the authentication server 20 requests the mobile device 10 to transmit the ICCID (step S7). The authentication information reception app 12 receives an ICCID transmission request from the authentication server 20 via the server communication unit 11 and the authentication information reception app 12 requests the UIM management unit 13 to transmit the ICCID (step S8).

The UIM management unit 13 requests the authentication information reception app 12 to transmit an app signature (application signature) in response to the ICCID transmission request (step S9), and the authentication information reception app 12 outputs the app signature to the UIM management unit 13 in response to the app signature transmission request (step S10).

The UIM management unit 13 performs an access control check for determining whether the ICCID of the UIM 31 should be transmitted to the authentication information reception app 12 (step S11). Specifically, the UIM management unit 13 determines whether the ICCID should be transmitted to the authentication information reception app 12 by confirming content of the app signature. When the UIM management unit 13 determines that the authentication information reception app 12 can receive the ICCID as a result of performing an access control check, the UIM management unit 13 requests the wearable device 30 to transmit an ICCID via the short-range communication unit 14 (step S12).

When the ICCID transmission request is received from the mobile device 10, the short-range communication unit 32 of the wearable device 30 outputs the ICCID transmission request to the UIM 31 (step S13).

When the ICCID transmission request is received from the short-range communication unit 32, the UIM 31 outputs the ICCID to the short-range communication unit 32 in response to the request (step S14) and the short-range communication unit 32 transmits the ICCID to the mobile device 10. Thereby, the UIM management unit 13 of the mobile device 10 receives the ICCID via the short-range communication unit 14 (step S15).

When the UIM management unit 13 receives the ICCID, the ICCID is output to the authentication information reception app 12 (step S16). The authentication information reception app 12 transmits the ICCID to the authentication server 20 via the server communication unit 11 (step S17). Thereby, the authentication information management unit 22 of the authentication server 20 receives the ICCID via the communication unit 24.

The authentication information management unit 22 acquires a key corresponding to a received ICCID (key information for secure communication) from the information retention unit 21 (step S18) and notifies the mobile device 10 of communication (secure communication establishment) based on the key (step S19). The mobile device 10 notifies the wearable device 30 of communication based on the key via the authentication information reception app 12, the UIM management unit 13, and the short-range communication unit 14 (steps S20 to S22).

The short-range communication unit 32 of the wearable device 30 confirms the key from the mobile device 10 (step S23). Thus, the authentication server 20 requests the wearable device 30 to establish secure communication via the mobile device 10.

When the UIM 31 approves secure communication establishment by confirming the key received from the mobile device 10, the ACK of the secure communication establishment is transmitted to the mobile device 10 and the mobile device 10 transmits the ACK of the secure communication establishment to the authentication server 20 (step S24).

When the authentication server 20 receives the ACK of secure communication establishment, the authentication information management unit 22 receives an authentication app retained by the information retention unit 21, transmits the authentication app to the mobile device 10, and notifies the mobile device 10 of an installation request for the authentication app for the wearable device 30. In response to the request, the mobile device 10 transmits the authentication app to the wearable device 30 and issues the authentication app installation request (step S25). Also, the authentication app transmitted here may be an update of an old version of authentication app.

The UIM 31 of the wearable device 30 receives the authentication app via the short-range communication unit 32, receives the installation request for the authentication app, and installs the authentication app (step S26).

When the UIM 31 completes the installation of the authentication app, the wearable device 30 transmits the ACK of the installation completion to the mobile device 10 and the mobile device 10 transmits the ACK to the authentication server 20 (step S27).

When the authentication server 20 receives the ACK, the authentication information management unit 22 generates an ID and a password as the authentication information corresponding to the ICCID, transmits the ID and the password to the authentication information reception app 12 of the mobile device 10, and makes a write request for the ID and the password for the wearable device 30. The authentication information reception app 12 transmits the ID and the password to the wearable device 30 via the short-range communication unit 14 and makes a write request for the ID and the password (step S28: authentication information reception step, authentication information generation step, and authentication information transmission step).

The UIM 31 registers the received ID and password (step S29) and transmits an ACK indicating that the registration is completed to the mobile device 10 and the mobile device 10 transmits the ACK to the authentication server 20 (step S30).

When the authentication server 20 receives the ACK indicating that the registration of the ID and the password is completed, the authentication information management unit 22 notifies the mobile device 10 of a request for closing secure communication and the mobile device 10 notifies the wearable device 30 of the request for closing the secure communication (step S31).

When the wearable device 30 receives the request for closing the secure communication, an ACK indicating the approval of secure communication closing is transmitted to the mobile device 10 and the mobile device 10 transmits the ACK to the authentication server 20 (step S32) and completes the process.

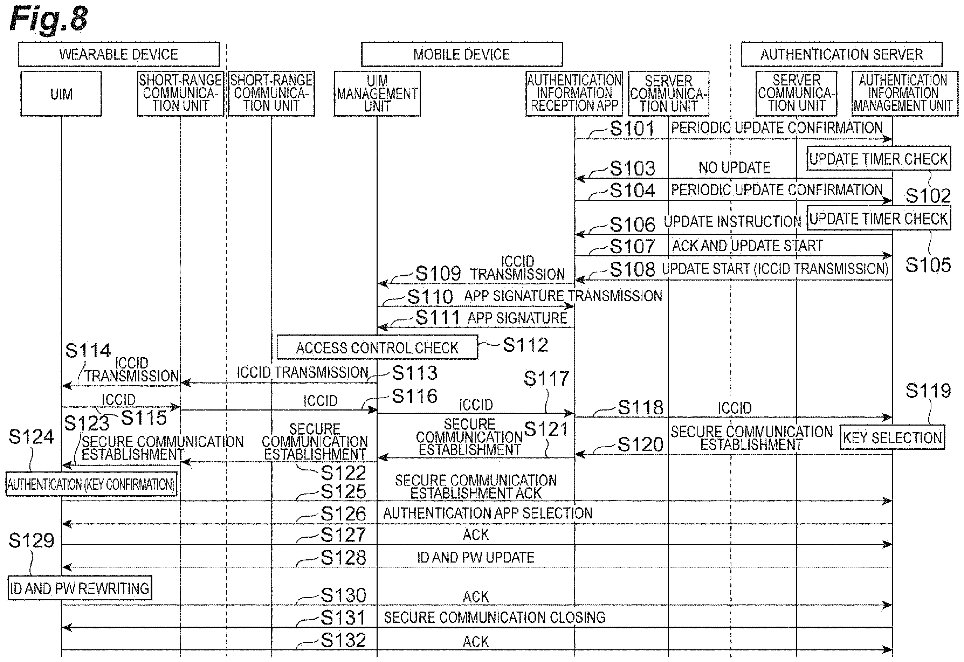

Next, a sequence diagram illustrated in FIG. 8 will be described. The sequence diagram illustrated in FIG. 8 is a sequence diagram of a process of newly updating the authentication information for the wearable device 30. Before the process of the sequence diagram illustrated in FIG. 8 starts, the server communication unit 11 and the short-range communication unit 14 of the mobile device 10 are assumed to determine that communication is possible by determining whether communication with the authentication server 20 and the wearable device 30 is possible. That is, the communication possibility determination unit 101 is assumed to determine that communication between the mobile device 10 and the authentication server 20 is possible and that communication between the mobile device 10 and the wearable device 30 is possible.

Here, the authentication information reception app 12 performs update confirmation for the authentication server 20 via the server communication unit 11 at a predetermined timing (for example, each predetermined time) (step S101). As a result, the authentication information management unit 22 of the authentication server 20 receives the update confirmation and checks an update timer (step S102). When the authentication information management unit 22 determines that a result of checking the update timer indicates that a preset time has not elapsed after the generation of the authentication information, information indicating that an update is unnecessary is transmitted to the mobile device 10 (step S103).

The authentication information reception app 12 re-performs the update confirmation for the authentication server 20 via the server communication unit 11 at the predetermined timing (step S104). As a result, the authentication information management unit 22 determines that the preset time has elapsed after the generation of the authentication information by checking the update timer (step S105) and the authentication information management unit 22 issues an update instruction to the mobile device 10 when the update is necessary (step S106).

The authentication information reception app 12 issues an update request (update start request) to the authentication server 20 according to the update instruction from the authentication server 20 (step S107). The authentication information management unit 22 transmits an ICCID transmission request to the mobile device 10 (step S108).

The authentication information reception app 12 issues the ICCID transmission request to the UIM management unit 13 in response to the ICCID transmission request from the authentication server 20 (step S109).

The UIM management unit 13 issues an app signature transmission request to the authentication information reception app 12 in response to the ICCID transmission request from the authentication information reception app 12 (step S110) and the authentication information reception app 12 outputs an app signature to the UIM management unit 13 in response to the app signature transmission request (step S111).

The UIM management unit 13 performs an access control check by confirming content of the app signature (step S112). When the UIM management unit 13 determines that a result of performing the access control check indicates that the authentication information reception app 12 can receive the ICCID, the UIM management unit 13 issues the ICCID transmission request to the wearable device 30 via the short-range communication unit 14 (step S113).

When the short-range communication unit 32 of the wearable device 30 receives the ICCID transmission request, the ICCID transmission request is output to the UIM 31 (step S114).

The UIM 31 outputs an ICCID to the short-range communication unit 32 when the ICCID transmission request is received from the short-range communication unit 32 (step S115) and the short-range communication unit 32 transmits the ICCID to the mobile device 10. As a result, the UIM management unit 13 of the mobile device 10 receives the ICCID via the short-range communication unit 14 (step S116).

When the UIM management unit 13 receives the ICCID, the ICCID is output to the authentication information reception app 12 (step S117). The authentication information reception app 12 transmits the ICCID to the authentication server 20 via the server communication unit 11 (step S118). Thereby, the authentication information management unit 22 of the authentication server 20 receives the ICCID via the communication unit 24.

The authentication information management unit 22 acquires a key corresponding to the received ICCID (key information for secure communication) from the information retention unit 21 (step S119) and notifies the mobile device 10 of communication based on the key (secure communication establishment) (step S120), and the mobile device 10 notifies the wearable device 30 of the communication based on the key via the authentication information reception app 12, the UIM management unit 13, and the short-range communication unit 14 (steps S121 to S123).

The short-range communication unit 32 of the wearable device 30 confirms the key from the mobile device 10 (step S124). Thus, the authentication server 20 issues a secure communication establishment request to the wearable device 30 via the mobile device 10.

When the UIM 31 approves the secure communication establishment after confirming the key received from the mobile device 10, an ACK of the secure communication establishment is transmitted to the mobile device 10 and the mobile device 10 transmits the ACK of the secure communication establishment to the authentication server 20 (step S125).

When the authentication server 20 receives the ACK of the secure communication establishment, the authentication information management unit 22 notifies the wearable device 30 of a request for selecting an authentication app for the wearable device 30 via the mobile device 10 (step S126).

The wearable device 30 transmits the ACK to the mobile device 10 and the mobile device 10 transmits the ACK to the authentication server 20 (step S127).

When the authentication server 20 receives the ACK, the authentication information management unit 22 re-generates an ID and a password as authentication information corresponding to the ICCID, transmits the ID and the password to the authentication information reception app 12 of the mobile device 10, and issues a write request for the ID and the password for the wearable device 30. The authentication information reception app 12 transmits the ID and the password to the wearable device 30 in response to the request and issues the write request for the ID and the password (step S128).

The UIM 31 registers the ID and the password received via the short-range communication unit 32 (step S129) and transmits an ACK indicating that registration is completed to the mobile device 10, and the mobile device 10 transmits the ACK to the authentication server 20 (step S130).

When the authentication server 20 receives the ACK indicating that the registration of the ID and the password is completed, the authentication information management unit 22 notifies the mobile device 10 of a request for closing secure communication and the mobile device 10 notifies the wearable device 30 of the request for closing the secure communication (step S131).

When the wearable device 30 receives the request for closing the secure communication, an ACK indicating the approval of secure communication closing is transmitted to the mobile device 10 and the mobile device 10 transmits the ACK to the authentication server 20 (step S132) and completes the process.

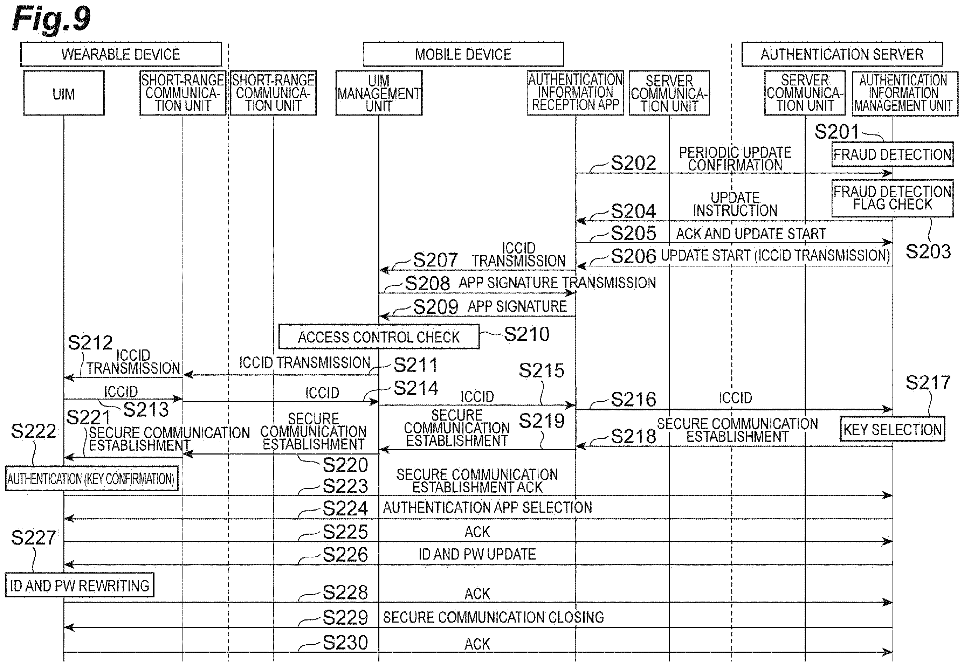

Next, a sequence diagram illustrated in FIG. 9 will be described. The sequence diagram illustrated in FIG. 9 is a diagram of a process of newly updating the authentication information for the wearable device 30. Before the process of the sequence diagram illustrated in FIG. 9 starts, the server communication unit 11 and the short-range communication unit 14 of the mobile device 10 are assumed to determine that communication is possible by determining whether communication with the authentication server 20 and the wearable device 30 is possible. That is, the communication possibility determination unit 101 is assumed to determine that communication between the mobile device 10 and the authentication server 20 is possible and that communication between the mobile device 10 and the wearable device 30 is possible. The authentication information management unit 22 of the authentication server 20 attaches fraud flag information to information of a user ID of a fraud target in case of fraud detection (step S201).

Here, the authentication information reception app 12 performs update confirmation for the authentication server 20 via the server communication unit 11 at a predetermined timing (for example, each predetermined time) (step S202). As a result, the authentication information management unit 22 of the authentication server 20 receives the update confirmation and checks a fraud detection flag (step S203). When the authentication information management unit 22 determines that a result of checking the fraud detection flag indicates that the flag is present, information indicating that an update is necessary is transmitted to the mobile device 10 (step S204).

The authentication information reception app 12 issues an update request to the authentication server 20 according to the update instruction from the authentication server 20 (step S205). The authentication information management unit 22 transmits an ICCID transmission request to the mobile device 10 (step S206).

The authentication information reception app 12 issues the ICCID transmission request to the UIM management unit 13 in response to the ICCID transmission request from the authentication server 20 (step S207).

The UIM management unit 13 issues an app signature transmission request to the authentication information reception app 12 in response to the ICCID transmission request from the authentication information reception app 12 (step S208) and the authentication information reception app 12 outputs an app signature to the UIM management unit 13 in response to the app signature transmission request (step S209).

The UIM management unit 13 performs an access control check by confirming content of the app signature (step S210). When the UIM management unit 13 determines that a result of performing the access control check indicates that the authentication information reception app 12 can receive the ICCID, the UIM management unit 13 issues the ICCID transmission request to the wearable device 30 via the short-range communication unit 14 (step S211).

When the short-range communication unit 32 of the wearable device 30 receives the ICCID transmission request, the ICCID transmission request is output to the UIM 31 (step S212).

The UIM 31 outputs an ICCID to the short-range communication unit 32 when the ICCID transmission request is received from the short-range communication unit 32 (step S213) and the short-range communication unit 32 transmits the ICCID to the mobile device 10. As a result, the UIM management unit 13 of the mobile device 10 receives the ICCID via the short-range communication unit 14 (step S214).

When the UIM management unit 13 receives the ICCID, the ICCID is output to the authentication information reception app 12 (step S215). The authentication information reception app 12 transmits the ICCID to the authentication server 20 via the server communication unit 11 (step S216). Thereby, the authentication information management unit 22 of the authentication server 20 receives the ICCID via the communication unit 24.

The authentication information management unit 22 acquires a key corresponding to the received ICCID (key information for secure communication) from the information retention unit 21 (step S217) and notifies the mobile device 10 of communication based on the key (secure communication establishment) (step S218), and the mobile device 10 notifies the wearable device 30 of the communication based on the key via the authentication information reception app 12, the UIM management unit 13, and the short-range communication unit 14 (steps S219 to S221).

The short-range communication unit 32 of the wearable device 30 confirms the key from the mobile device 10 (step S222). Thus, the authentication server 20 issues a secure communication establishment request to the wearable device 30 via the mobile device 10.

When the UIM 31 approves the secure communication establishment after confirming the key received from the mobile device 10, an ACK of the secure communication establishment is transmitted to the mobile device 10 and the mobile device 10 transmits the ACK of the secure communication establishment to the authentication server 20 (step S223).

When the authentication server 20 receives the ACK of the secure communication establishment, the authentication information management unit 22 notifies the wearable device 30 of a request for selecting an authentication app for the wearable device 30 via the mobile device 10 (step S224).

The wearable device 30 transmits the ACK to the mobile device 10 and the mobile device 10 transmits the ACK to the authentication server 20 (step S225).

When the authentication server 20 receives the ACK, the authentication information management unit 22 re-generates an ID and a password as authentication information corresponding to the ICCID, transmits the ID and the password to the authentication information reception app 12 of the mobile device 10, and issues a write request for the ID and the password for the wearable device 30. The authentication information reception app 12 transmits the ID and the password to the wearable device 30 in response to the request and issues the write request for the ID and the password (step S226).

The UIM 31 registers the ID and the password received via the short-range communication unit 32 (step S227) and transmits an ACK indicating that registration is completed to the mobile device 10, and the mobile device 10 transmits the ACK to the authentication server 20 (step S228).

When the authentication server 20 receives the ACK indicating that the registration of the ID and the password is completed, the authentication information management unit 22 notifies the mobile device 10 of a request for closing secure communication and the mobile device 10 notifies the wearable device 30 of the request for closing the secure communication (step S229).

When the wearable device 30 receives the request for closing the secure communication, an ACK indicating the approval of secure communication closing is transmitted to the mobile device 10 and the mobile device 10 transmits the ACK to the authentication server 20 (step S230) and completes the process.

Also, although communication between the mobile device 10 and the authentication server 20 is performed by mobile communication in the above-mentioned embodiment, it may be performed by communication by a wireless LAN (for example, WiFi or the like). Also, it may be performed by communication for connecting to a mobile communication network via the wireless LAN. When the communication by the wireless LAN is performed, a wireless LAN access point is used. The wireless LAN access point may be provided by a communication provider of the mobile communication network.

Also, although the case in which an update request is issued from the mobile device 10 when the authentication information is updated has been described in the above-mentioned embodiment, the authentication server 20 may determine whether an update is necessary and an update instruction may be issued from the authentication server 20 after it is determined that the update is necessary. Specifically, the update determination unit 203 of the authentication server 20 determines whether a preset predetermined time has elapsed after generation or transmission of the authentication information at a predetermined timing, determines whether misuse of the authentication information is detected by referring to presence/absence of information indicating misuse registered by the fraud detection unit 204 (for example, misuse flag information), and determines whether the number of authentications exceeds a predetermined threshold value (a value predefined by the update determination unit 203), regardless of the presence/absence of update confirmation from the mobile device 10. When the update determination unit 203 determines that the update is necessary, the information transmission unit 207 issues an update instruction to the mobile device 10 by transmitting information indicating that the update is necessary to the mobile device 10. Also, at the timing at which the fraud detection unit 204 detects the misuse of the authentication information or the timing at which the authentication server 20 registers information indicating that the misuse of the authentication information is present in the information retention unit 21, the information transmission unit 207 may be configured to transmit information indicating that an update is necessary to the mobile device 10. Also, the mobile device 10 may determine whether the update is necessary. That is, the mobile device 10 may be configured to include an update determination means corresponding to the update determination unit 203. Specifically, the mobile device 10 determines whether a preset predetermined time has elapsed after the reception of the authentication information at a predetermined timing and issues an update request to the authentication server 20 when the predetermined time has elapsed.

Also, although the case in which the authentication device 40 transmits the authentication information received from the wearable device 30 to the authentication server 20 has been described in the above-mentioned embodiment, the authentication information may be transmitted to the authentication server 20 via another server device (for example, an application server or the like provided by a communication provider of a mobile communication network or another person).

Also, although the case in which the wearable device 30 transmits the authentication information retained by the wearable device 30 from the wearable device 30 to the authentication device 40 during the authentication process has been described in the above-mentioned embodiment, the authentication information may be transmitted from the wearable device 30 to the mobile device 10 and the mobile device 10 may transmit the authentication information to the authentication device 40.

Also, although the case in which the wearable device 30 of the authentication information generation target is specified on the basis of the ICCID transmitted from the authentication information reception app 12 has been described in the above-mentioned embodiment, the wearable device 30 of an authentication information generation target may be specified on the basis of the ICCID specified from the line information to be used in line authentication in the mobile communication line.

Also, although the case in which an ID and a password are applied as the authentication information has been described in the above-mentioned embodiment, a one-time password (OTP), a digital certificate, or the like may be applied.

Also, although not illustrated in the flow of FIG. 7, the authentication server 20 may determine whether it is possible to transmit the authentication information on the basis of the line information and the ICCID transmitted from the mobile device 10 as described in a function of the transmission possibility determination unit 205 of the authentication server 20. Specifically, the ICCID specified from the line information and the ICCID transmitted from the mobile device 10 are compared, the transmission of the authentication information (an update of an authentication app, this is also true hereinafter) may be permitted when the ICCIDs match, and the transmission of the authentication information may be prohibited when the ICCIDs do not match.

Also, if the above-mentioned ICCIDs do not match, the authentication information may be permitted to be transmitted to the mobile device 10 when the communication unit 24 (a correspondence information reception means) receives information indicating that the ICCID specified from the line information and the ICCID received from the mobile device 10 are associated (for example, authentication information previously generated and stored in the wearable device 30) from the mobile device 10.

For example, when the above-mentioned ICCIDs do not match, the mobile device 10 is notified that the two ICCIDs do not match and an input of information for verifying whether the ICCID related to the line information and the ICCID transmitted from the mobile device are for the same user (association information indicating that these ICCIDs are associated) is required. This information is, for example, a preset password and the user is pre-notified thereof. This password may be authentication information previously generated and stored in the wearable device 30. That is, password authentication is performed at this time.

When information for verifying the same user is input, the transmission of the authentication information is permitted. Also, in this case, association information indicating that the ICCIDs are associated is stored in the correspondence information retention unit 206. Thereafter, on the basis of the information, the transmission of the authentication information is permitted in the case of a combination of these ICCIDs. That is, at the next transmission time of the authentication information, the authentication information is automatically transmitted without the above-mentioned password authentication.

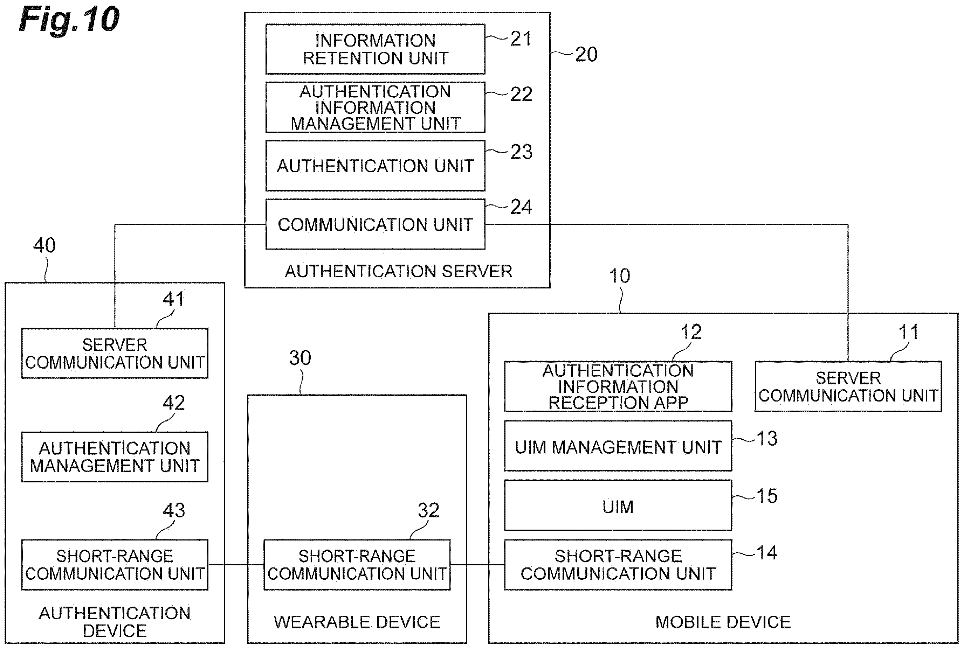

Also, when the UIM 15 which is a UIM is provided in the mobile device 10 as in the authentication information management system 1 illustrated in FIG. 10, line information is specified from information based on the UIM 15 of the mobile device 10 and the authentication information management unit 22 specifies an ICCID of the UIM 15 from the line information. On the other hand, the mobile device 10 acquires and transmits an ICCID of the wearable device 30 (for example, an ICCID defined in a secure element). The authentication information management unit 22 determines the transmission of the authentication information as mentioned above on the basis of these ICCIDs. The authentication information management unit 22 compares the ICCID of the UIM 15 and the ICCID of the wearable device 30, and the ICCIDs do not match. In this case, the mobile device 10 is requested to transmit the association information (for example, is asked about current authentication information). As a result of the server communication unit 11 (an association information transmission means) transmitting association information (authentication information) via the authentication information reception app 12 of the mobile device 10, the authentication information is permitted to be transmitted to the mobile device 10 when the communication unit 24 receives valid authentication information from the mobile device 10. Thereby, when the mobile device 10 and the wearable device 30 have the UIM, it is possible to appropriately transmit authentication information even when the ICCID based on the line authentication is different from the ICCID of the wearable device 30 connected to the mobile device 10.

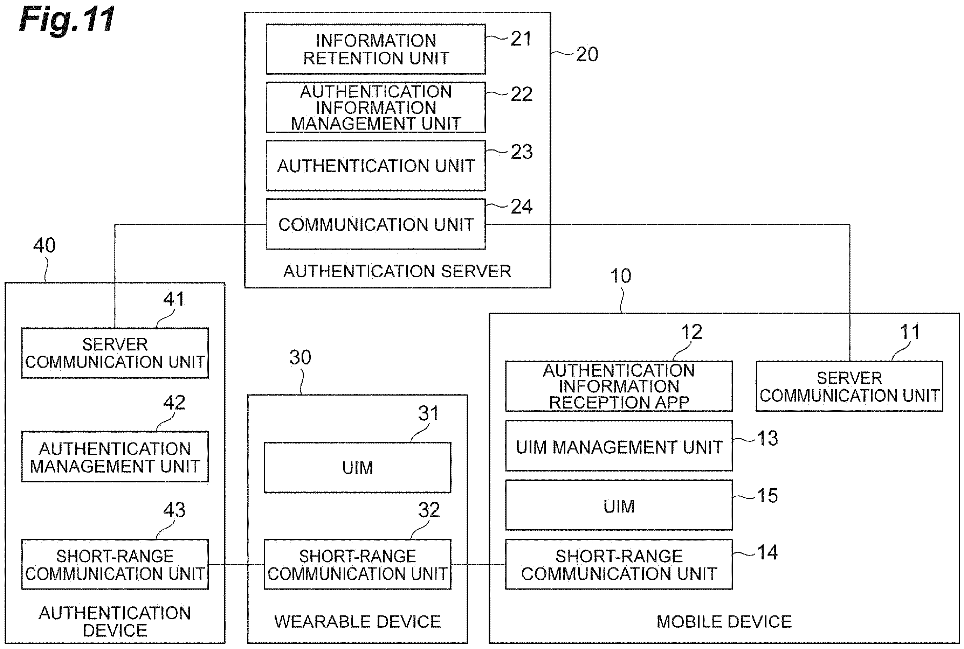

Also, when both the mobile device 10 and the wearable device 30 have the UIM (when the mobile device 10 has the UIM 15 and the wearable device 30 has the UIM 31) as in the authentication information management system 1 illustrated in FIG. 11, the mobile device 10 performs mobile communication using the UIM provided in the mobile device 10. Accordingly, the line information of the UIM 15 of the mobile device 10 is transmitted to the authentication server 20. In the authentication server 20, the authentication information management unit 22 specifies the ICCID from the line information. Also, the mobile device 10 transmits the ICCID of the UIM 31 provided in the wearable device 30. The authentication information management unit 22 determines the transmission of authentication information as mentioned above on the basis of these ICCIDs.

If these ICCIDs do not match as mentioned above, the authentication information is transmitted to the mobile device 10 when the association information indicating that the ICCID specified from the line information for the mobile device 10 and the ICCID received from the mobile device 10 are associated is received. When information indicating the above-mentioned association is received, information obtained by associating the ICCID based on the line information and the ICCID of the UIM 31 mounted on the wearable device is retained. If the ICCID based on the line information is different from the ICCID of the wearable device 30 or the ICCID of the UIM 31 mounted on the wearable device, it may be determined that transmission is possible when the information obtained by associating the ICCID based on the line information and the ICCID of the wearable device 30 or the ICCID of the UIM 31 mounted on the wearable device is retained.

### (Operations and effects)

Next, the operations and effects will be described. The mobile device 10 can perform short-range communication with the wearable device 30 which is a device capable of performing the short-range communication and perform communication other than the short-range communication with the authentication server 20 which transmits the authentication information which is information for receiving authentication from the authentication device 40. The mobile device 10 determines whether the mobile device 10 can perform communication with the wearable device 30 and determines whether the mobile device 10 can perform communication with the authentication server 20. When it is determined that communication between the mobile device 10 and the wearable device 30 is possible and communication between the mobile device 10 and the authentication server 20 is possible, the mobile device 10 transmits identification information corresponding to the wearable device 30 to the authentication server 20, issues an authentication information transmission request to the authentication server 20, receives authentication information from the authentication server 20 in response to the transmission request, and transmits the received authentication information to the wearable device 30.

In this case, because the authentication information is received from the authentication server 20 and the authentication information is transmitted to the wearable device 30 using the fact that the mobile device 10 can communicate with the wearable device 30 and the mobile device 10 can communicate with the authentication server 20 as a trigger, the mobile device 10 can automatically receive the authentication information from the authentication server 20. Thereby, it is possible to receive authentication information having a higher security level than authentication information easily input by a user of the mobile device 10. That is, the mobile device 10 can also secure a security level of the authentication information while maintaining convenience for the user. Also, because the wearable device 30 retains the authentication information received from the authentication server 20 in the authentication information management system 1, the wearable device 30 can transmit the authentication information from the wearable device 30 to the authentication device 40 through short-range communication and receive authentication. Consequently, even in a state in which the mobile device 10 cannot communicate with the authentication server 20 in the authentication information management system 1, it is possible to receive authentication if the wearable device 30 retains the authentication information.

Also, the mobile device 10 inputs an instruction for updating the authentication information and requests the authentication server 20 to transmit the authentication information when the instruction for updating the authentication information is input. In this case, the mobile device 10 can update the authentication information of the wearable device 30 because an authentication information transmission request is made when the instruction for updating the authentication information is input at a predetermined timing. Thus, because the mobile device 10 appropriately updates the authentication information of the wearable device 30 in response to the update instruction, it is possible to increase a security level of the authentication information of the wearable device 30 more than when the authentication information of the wearable device 30 is fixed.

Also, the authentication information management system 1 includes the wearable device 30 which is a device capable of performing short-range communication, the authentication server 20 configured to transmit authentication information which is information for receiving authentication from the authentication device 40, and the mobile device 10 capable of performing short-range communication with the wearable device 30 and performing communication other than the short-range communication with the authentication server 20, wherein the wearable device 30 transmits identification information (ICCID) corresponding to the short-range communication device to the mobile device 10 and receives the authentication information from the mobile device 10 to retain the authentication information. The mobile device 10 determines whether the mobile device 10 can communicate with the wearable device 30 and determines whether the mobile device 10 can communicate with the authentication server 20. When it is determined that communication between the mobile device 10 and the wearable device 30 is possible and communication between the mobile device 10 and the authentication server 20 is possible, the mobile device 10 transmits identification information corresponding to the wearable device 30 to the authentication server 20, requests the authentication server 20 to transmit authentication information, receives the authentication information from the authentication server 20 in response to the transmission request, and transmits the received authentication information to the wearable device 30. The authentication server 20 receives an ICCID, receives an authentication information transmission request, generates authentication information of the wearable device 30, and transmits the authentication information to the mobile device 10 when the authentication information transmission request is received.

In this case, because the authentication information is received from the authentication server 20 and the authentication information is transmitted to the wearable device 30 using the fact that the mobile device 10 can communicate with the wearable device 30 and the mobile device 10 can communicate with the authentication server 20 as a trigger, the mobile device 10 can automatically receive the authentication information from the authentication server 20 and receive authentication information having a higher security level than authentication information easily input by a user of the mobile device 10. That is, the authentication information management system 1 can also secure a security level of the authentication information of the wearable device 30 while maintaining convenience for the user.

Also, in the authentication information management system 1, it is determined whether an update of the authentication information is necessary and the authentication information is re-generated when it is determined that it is necessary to update the authentication information. In this case, because the authentication information of the wearable device 30 is updated when it is determined that the update is necessary in the authentication information management system 1, it is possible to increase a security level of the authentication information of the wearable device 30 more than when the authentication information of the wearable device 30 is fixed.

Also, when the authentication information is not updated for a fixed period in the authentication information management system 1, it is determined that the update of the authentication information is necessary. In this case, the authentication information management system 1 can update the authentication information of the wearable device 30 each predetermined period because it is determined that the update is necessary when the authentication information is not updated for the fixed period and the authentication information is updated according to this determination. Thereby, the authentication information management system 1 can increase a security level of the authentication information of the wearable device 30 more than when the authentication information of the wearable device 30 is fixed.

Also, the authentication information management system 1 detects the misuse of the authentication information and determines that it is necessary to update the authentication information when the misuse is detected. In this case, the authentication information management system 1 can update the authentication information of the wearable device 30 when there is no misuse because it is determined that the update is necessary when the misuse of the authentication information is detected. Thereby, the authentication information management system 1 can secure the security level of the authentication information of the wearable device 30.

Also, in the authentication information management system 1, line information to be used in communication between the mobile device 10 and the authentication server 20 and an ICCID corresponding to the wearable device 30 or an ICCID corresponding to the UIM may be transmitted to the authentication server 20 as information corresponding to the wearable device 30, and the authentication server 20 may determine whether the transmission of the authentication information is possible on the basis of the ICCID corresponding to the wearable device 30 and the ICCID corresponding to the UIM and determine whether it is necessary to update the authentication information when it is determined that the transmission is possible. In this case, the authentication information management system 1 can prevent the authentication information of the wearable device 30 from being updated after information of the wearable device 30 is fraudulently acquired because the authentication server 20 determines whether the authentication information of the wearable device 30 can be updated on the basis of the line information and the ICCID corresponding to the wearable device 30 or the ICCID corresponding to the UIM. Thereby, the authentication information management system 1 can secure the security level of the authentication information of the wearable device 30.

In the authentication information management system 1, the mobile device 10 transmits information indicating the association of the line authentication information and the ICCID of the wearable device 30 or the ICCID of the UIM 31 mounted on the wearable device to the authentication server 20, and it is determined that transmission is possible when the information indicating the association (for example, authentication information retained by the wearable device 30) is received if the line authentication information and the ICCID of the wearable device 30 or the ICCID of the UIM 31 mounted on the wearable device are not associated. In the case, the authentication information management system 1 can prevent authentication information from being fraudulently updated because the authentication server 20 determines that transmission is possible when information in which the line authentication information and the ICCID of the wearable device 30 or the ICCID of the UIM 31 mounted on the wearable device are associated is received from the mobile device 10 if the line information and the ICCID of the wearable device 30 or the ICCID of the UIM 31 mounted on the wearable device are different. Thereby, the authentication information management system 1 can secure the security level of the authentication information of the short-range communication device.

Also, the authentication information management system 1 retains information obtained by associating the line authentication information and the ICCID of the wearable device 30 or the ICCID of the UIM 31 mounted on the wearable device when information indicating the above-mentioned association is received and determines that transmission is possible when information obtained by associating the ICCID of the wearable device 30 or the ICCID of the UIM 31 mounted on the wearable device is retained if the line authentication information and the ICCID of the wearable device 30 or the ICCID of the UIM 31 mounted on the wearable device is not associated.

In this case, in the authentication information management system 1, because information obtained by associating the line authentication information and the ICCID of the wearable device 30 or the ICCID of the UIM 31 mounted on the wearable device is retained when the ICCID of the wearable device 30 or the ICCID of the UIM 31 mounted on the wearable device is associated even when a result of the authentication server 20 comparing the line authentication information and the ICCID of the wearable device 30 or the ICCID of the UIM 31 mounted on the wearable device indicates that there is no association, it is unnecessary to ask the mobile device 10 about whether the ICCID of the wearable device 30 or the ICCID of the UIM 31 mounted on the wearable device is associated during subsequent update possibility determination. Consequently, the authentication information management system 1 can efficiently update the authentication information.

Although the case in which the fraud detection unit 204 of the authentication server 20 performs fraud detection has been described in the above-mentioned embodiment, the wearable device 30 may be configured to perform the fraud detection. That is, the wearable device 30 may be configured to include a fraud detection means corresponding to the fraud detection unit 204. For example, when a result of transmitting authentication information in response to the authentication request from a certain authentication device 40 indicates that the number of authentication failures exceeds a threshold value preset in the wearable device 30, the wearable device 30 detects that the transmitted authentication information is misused and notifies the authentication server 20 that the authentication information is misused via the mobile device 10. On the basis of this notification, the authentication server 20 registers information indicating that the authentication information is misused in the information retention unit 21.

The wearable device 30 described in the above-mentioned embodiment may be independently configured or a terminal device different from the mobile device 10 and the wearable device 30 may be integrally configured.

### Reference Signs List

- 1: Authentication information management system
- 10: Mobile device
- 11: Server communication unit
- 12: Authentication information reception app
- 13: UIM management unit
- 14: Short-range communication unit
- 20: Authentication server
- 21: Information retention unit
- 22: Authentication information management unit
- 23: Authentication unit
- 24: Communication unit
- 30: Wearable device
- 31: UIM
- 32: Short-range communication unit
- 40: Authentication device
- 41: Server communication unit
- 42: Authentication management unit
- 43: Short-range communication unit
- 101: Communication possibility determination unit
- 102: Authentication information transmission request unit
- 103: Authentication information reception unit
- 104: Authentication information transmission unit
- 105: Update instruction input unit
- 201: Reception unit
- 202: Authentication information generation unit
- 203: Update determination unit
- 204: Fraud detection unit
- 205: Transmission possibility determination unit
- 206: Correspondence information retention unit
- 207: Information transmission unit
- 301: Information transmission unit
- 302: Information reception unit
- 303: Authentication information retention unit

## Claims

1. An authentication information management system (1) including a short-range communication device (30) which is a device capable of performing short-range communication, an authentication server (20) configured to transmit authentication information which is information for receiving authentication from a device (40) making an authentication request, and a terminal device (10) capable of performing short-range communication with the short-range communication device (30) and capable of performing communication other than the short-range communication with the authentication server (20),
wherein the short-range communication device (30) includes:
a short-range-communication-device authentication information reception means (302) configured to receive the authentication information from the terminal device (10); and
an authentication information retention means (303) configured to retain the authentication information received by the short-range-communication-device authentication information reception means (302);
wherein the terminal device (10) includes:
a communication possibility determination means (101) configured to determine whether the terminal device (10) is able to communicate with the short-range communication device (30) and determine whether the terminal device (10) is able to communicate with the authentication server (20);
an authentication information transmission request means (102) configured to transmit identification information corresponding to the short-range communication device (30) to the authentication server (20) and make an authentication information transmission request triggered by the communication possibility determination means (101) determining that communication between the terminal device (10) and the short-range communication device (30) is possible and communication between the terminal device (10) and the authentication server (20) is possible;
a terminal-device authentication information reception means (103) configured to receive the authentication information from the authentication server (20) in response to the authentication information transmission request from the authentication information transmission request means (102); and
a terminal-device authentication information transmission means (104) configured to transmit the authentication information received by the terminal-device authentication information reception means (103) to the short-range communication device (30), and
wherein the authentication server (20) includes:
a reception means (201) configured to receive the identification information corresponding to the short-range communication device (30) and receive the authentication information transmission request;
an authentication information generation means (202) configured to generate the authentication information of the short-range communication device (10); and
an authentication-server authentication information transmission means (207) configured to transmit the authentication information generated by the authentication information generation means (202) to the terminal device (10) when the reception means (201) receives the authentication information transmission request;
the authentication information management system (1) further comprising:
an update determination means (203) configured to determine whether an update of the authentication information is necessary,
wherein the authentication information generation means (202) regenerates authentication information of the short-range communication device (30) when the update determination means determines that the update is necessary; and
wherein the authentication information transmission request means (102) transmits line authentication information which is authentication information of a line for use in communication between the terminal device (10) and the authentication server (20) and either an identifier of the short-range communication device (30) or an identifier of a subscriber authentication module mounted on the short-range communication device (30) as the identification information corresponding to the short-range communication device (30) to the authentication server (20),
wherein the authentication server (20) further includes a transmission possibility determination means (205) configured to determine whether the authentication information can be transmitted on the basis of the line authentication information matching or being associated with either the identifier of the short-range communication device (30) or the identifier of the subscriber authentication module mounted on the short-range communication device (30), and
wherein the update determination means (203) is configured to determine whether the update of the authentication information is necessary only when the transmission possibility determination means (205) determines that the transmission is possible.

2. The authentication information management system (1) according to claim 1, wherein the update determination means (203) determines that the update of the authentication information is necessary when the authentication information is not updated for a fixed period.

3. The authentication information management system (1) according to claim 1, further comprising:
a fraud detection means (204) configured to detect misuse of the authentication information,
wherein the update determination means (203) determines that it is necessary to update the authentication information when the fraud detection means (204) detects the misuse.

4. The authentication information management system (1) according to claim 1,
wherein the terminal device (10) further includes an association information transmission means configured to transmit association information which is information indicating association of the line authentication information and the identifier of the short-range communication device (30) or the identifier of the subscriber authentication module mounted on the short-range communication device (30) to the authentication server (20),
wherein the authentication server (20) further includes an association information reception means (201) configured to receive the association information, and
wherein the transmission possibility determination means (205) determines that transmission is possible if the association information is received by the association information reception means when the line authentication information and the identifier of the short-range communication device (30) or the identifier of the subscriber authentication module mounted on the short-range communication device (30) are not associated.

5. The authentication information management system (1) according to claim 4,
wherein the authentication server (20) further includes an information retention means (206) configured to retain information obtained by associating the line authentication information and the identifier of the short-range communication device (30) or the identifier of the subscriber authentication module mounted on the short-range communication device (30) when the transmission possibility determination means (205) receives the association information of the line authentication information and the identifier of the short-range communication device (30) or the identifier of the subscriber authentication module mounted on the short-range communication device from the terminal device (30), and
wherein the transmission possibility determination means (206) determines that the transmission is possible when the information retention means retains (206) the information obtained by associating the line authentication information and the identifier of the short-range communication device (30) or the identifier of the subscriber authentication module mounted on the short-range communication device (30) if the line authentication information and the identifier of the short-range communication device (30) or the identifier of the subscriber authentication module mounted on the short-range communication device (30) are not associated.

## Patentansprüche

1. Ein Authentifizierungsinformationen-Managementsystem (1), aufweisend:
eine Kurzstreckenkommunikationsvorrichtung (30), die eine Vorrichtung ist, welche in der Lage ist, eine Kurzstreckenkommunikation durchzuführen, einen Authentifizierungsserver (20), der konfiguriert ist, um Authentifizierungsinformationen zu übertragen, die Informationen zum Empfangen einer Authentifizierung von einer Vorrichtung (40) sind, die eine Authentifizierungsanforderung stellt, und einer Endgerät-Vorrichtung (10), die in der Lage ist, eine Kurzstreckenkommunikation mit der Kurzstreckenkommunikationsvorrichtung (30) durchzuführen, und die in der Lage ist, eine andere Kommunikation als die Kurzstreckenkommunikation mit dem Authentifizierungsserver (20) durchzuführen,
wobei die Kurzstreckenkommunikationsvorrichtung (30) aufweist:
ein Kurzstreckenkommunikationsvorrichtung-Authentifizierungsinformationen-Empfangsmittel (302), das konfiguriert ist, um die Authentifizierungsinformationen von der Endgerät-Vorrichtung (10) zu empfangen; und
ein Authentifizierungsinformationen-Rückhaltemittel (303), das konfiguriert ist, um die von dem Kurzstreckenkommunikationsvorrichtung-Authentifizierungsinformationen-Empfangsmittel (302) empfangenen Authentifizierungsinformationen zurückzuhalten;
wobei die Endgerät-Vorrichtung (10) aufweist:
ein Kommunikationsmöglichkeit-Ermittlungsmittel (101), das konfiguriert ist, um zu ermitteln, ob die Endgerät-Vorrichtung (10) in der Lage ist, mit der Kurzstreckenkommunikationsvorrichtung (30) zu kommunizieren, und um zu ermitteln, ob die Endgerät-Vorrichtung (10) in der Lage ist, mit dem Authentifizierungsserver (20) zu kommunizieren;
ein Authentifizierungsinformationen-Übertragungsanfragemittel (102), das konfiguriert ist zum Übertragen von Identifizierungsinformationen, die mit der Kurzstreckenkommunikationsvorrichtung (30) korrespondieren, an den Authentifizierungsserver (20) zu übertragen, und zum Stellen einer Authentifizierungsinformationen-Übertragungsanfrage, die durch das Kommunikationsmöglichkeit-Ermittlungsmittel (101) ausgelöst wird, das ermittelt, dass eine Kommunikation zwischen der Endgerät-Vorrichtung (10) und der Kurzstreckenkommunikationsvorrichtung (30) möglich ist und dass eine Kommunikation zwischen der Endgerät-Vorrichtung (10) und dem Authentifizierungsserver (20) möglich ist;
ein Endgerät-Vorrichtung-Authentifizierungsinformationen-Empfangsmittel (103), das konfiguriert ist, um die Authentifizierungsinformationen von dem Authentifizierungsserver (20) zu empfangen, als Antwort auf die Authentifizierungsinformationen-Übertragungsanfrage von dem Authentifizierungsinformationen-Übertragungsanfragemittel (102); und
ein Endgerät-Vorrichtung-Authentifizierungsinformationen-Übertragungsmittel (104), das konfiguriert ist, um die von dem Endgerät-Vorrichtung-Authentifizierungsinformationen-Empfangsmittel (103) empfangenen Authentifizierungsinformationen an die Kurzstreckenkommunikationsvorrichtung (30) zu übertragen, und
wobei der Authentifizierungsserver (20) aufweist;
ein Empfangsmittel (201), das konfiguriert ist zum Empfangen der Identifizierungsinformationen, welche mit der Kurzstreckenkommunikationsvorrichtung (30) korrespondieren, und zum Empfangen der Authentifizierungsinformationen-Übertragungs anfrage;
ein Authentifizierungsinformationen-Erzeugungsmittel (202), das konfiguriert ist, um die Authentifizierungsinformationen der Kurzstreckenkommunikationsvorrichtung (10) zu erzeugen; und
ein Authentifizierungsserver-Authentifizierungsinformationen-Übertragungsmittel (207), das konfiguriert ist, um die von dem Authentifizierungsinformationen-Erzeugungsmittel (202) erzeugten Authentifizierungsinformationen an die Endgerät-Vorrichtung (10) zu übertragen, wenn das Empfangsmittel (201) die Authentifizierungsinformationen-Übertragungsanfrage empfängt;
wobei das Authentifizierungsinformationen-Managementsystem (1) ferner aufweist:
ein Aktualisierung-Ermittlungsmittel (203), das konfiguriert ist, um zu ermitteln, ob eine Aktualisierung der Authentifizierungsinformationen notwendig ist,
wobei das Authentifizierungsinformationen-Erzeugungsmittel (202) Authentifizierungsinformationen der Kurzstreckenkommunikationsvorrichtung (30) regeneriert, wenn das Aktualisierung-Ermittlungsmittel (203) ermittelt, dass die Aktualisierung notwendig ist; und
wobei das Authentifizierungsinformationen-Übertragungsanfragemittel (102) Leitungsauthentifizierungsinformationen, die Authentifizierungsinformationen einer Leitung sind, die für die Kommunikation zwischen der Endgerät-Vorrichtung (10) und dem Authentifizierungsserver (20) verwendet wird, und entweder eine Kennung der Kurzstreckenkommunikationsvorrichtung (30) oder eine Kennung eines Teilnehmer-Authentifizierungsmoduls, welches an der Kurzstreckenkommunikationsvorrichtung (30) montiert ist, als die Identifizierungsinformationen, die mit der Kurzstreckenkommunikationsvorrichtung (30) korrespondieren, an den Authentifizierungsserver (20) überträgt,
wobei der Authentifizierungsserver (20) ferner ein Übertragungsmöglichkeit-Ermittlungsmittel (205) aufweist, das konfiguriert ist, um zu ermitteln, ob die Authentifizierungsinformationen übertragen werden können, auf der Basis, dass die Leitungsauthentifizierungsinformationen entweder mit der Kennung der Kurzstreckenkommunikationsvorrichtung (30) oder der Kennung des Teilnehmer-Authentifizierungsmoduls, welches an der Kurzstreckenkommunikationsvorrichtung (30) montiert ist, zusammenpassen oder dieser zugeordnet sind, und
wobei das Aktualisierung-Ermittlungsmittel (203) konfiguriert ist, um nur dann zu ermitteln, ob die Aktualisierung der Authentifizierungsinformationen notwendig ist, wenn das Übertragungsmöglichkeit-Ermittlungsmittel (205) ermittelt, dass die Übertragung möglich ist.

2. Das Authentifizierungsinformationen-Managementsystem (1) gemäß Anspruch 1, wobei das Aktualisierung-Ermittlungsmittel (203) ermittelt, dass die Aktualisierung der Authentifizierungsinformationen notwendig ist, wenn die Authentifizierungsinformationen über innerhalb eines festgelegten Zeitraums nicht aktualisiert werden.

3. Das Authentifizierungsinformationen-Managementsystem (1) gemäß Anspruch 1, ferner aufweisend:
ein Betrugserkennungsmittel (204), das konfiguriert ist, um einen Missbrauch der Authentifizierungsinformationen zu erkennen,
wobei das Aktualisierung-Ermittlungsmittel (203) ermittelt, das ein Aktualisieren der Authentifizierungsinformationen notwendig ist, wenn das Betrugserkennungsmittel (204) den Missbrauch erkennt.

4. Das Authentifizierungsinformationen-Managementsystem (1) gemäß Anspruch 1,
wobei die Endgerät-Vorrichtung (10) ferner ein Zuordnungsinformationen-Übertragungsmittel aufweist, welches konfiguriert ist, um Zuordnungsinformationen, die Informationen sind, welche eine Zuordnung der Leitungsauthentifizierungsinformationen zu der Kennung der Kurzstreckenkommunikationsvorrichtung (30) oder der Kennung des Teilnehmer-Authentifizierungsmoduls, das an der Kurzstreckenkommunikationsvorrichtung (30) montiert ist, anzeigen, an den Authentifizierungsserver (20) zu übertragen,
wobei der Authentifizierungsserver (20) ferner ein Zuordnungsinformationen-Empfangsmittel (201) aufweist, das konfiguriert ist, um die Zuordnungsinformationen zu empfangen, und
wobei das Übertragungsmöglichkeit-Ermittlungsmittel (205) ermittelt, dass eine Übertragung möglich ist, wenn die Zuordnungsinformationen von dem Zuordnungsinformationen-Empfangsmittel empfangen werden, wenn die Leitungsauthentifizierungsinformationen und die Kennung der Kurzstreckenkommunikationsvorrichtung (30) oder die Kennung des Teilnehmer-Authentifizierungsmoduls, das an der Kurzstreckenkommunikationsvorrichtung (30) montiert ist, nicht zugeordnet sind.

5. Das Authentifizierungsinformationen-Managementsystem (1) gemäß Anspruch 4,
wobei der Authentifizierungsserver (20) ferner ein Informationen-Rückhaltemittel (206) aufweist, das konfiguriert ist, um Informationen, welche durch Zuordnen der Leitungsauthentifizierungsinformationen und der Kennung der Kurzstreckenkommunikationsvorrichtung (30) oder der Kennung des Teilnehmer-Authentifizierungsmoduls, das an der Kurzstreckenkommunikationsvorrichtung (30) montiert ist, erhalten werden, zurückzuhalten, wenn das Übertragungsmöglichkeit-Ermittlungsmittel (205) die Zuordnungsinformationen der Leitungsauthentifizierungsinformationen und der Kennung der Kurzstreckenkommunikationsvorrichtung (30) oder der Kennung des Teilnehmer-Authentifizierungsmoduls, das an der Kurzstreckenkommunikationsvorrichtung (30) montiert ist, empfängt, und
wobei das Übertragungsmöglichkeit-Ermittlungsmittel (206) ermittelt, dass eine Übertragung möglich ist, wenn das Informationen-Rückhaltemittel (206) die Informationen, welche durch Zuordnen der Leitungsauthentifizierungsinformationen und der Kennung der Kurzstreckenkommunikationsvorrichtung (30) oder der Kennung des Teilnehmer-Authentifizierungsmoduls, das an der Kurzstreckenkommunikationsvorrichtung (30) montiert ist, erhalten werden, zurückhält, wenn die Leitungsauthentifizierungsinformationen und die Kennung der Kurzstreckenkommunikationsvorrichtung (30) oder die Kennung des Teilnehmer-Authentifizierungsmoduls, das an der Kurzstreckenkommunikationsvorrichtung (30) angebracht sind, nicht zugeordnet sind.

## Revendications

1. Système de gestion d'informations d'authentification (1) incluant un dispositif de communication à courte portée (30) qui est un dispositif en mesure de mettre en oeuvre une communication à courte portée, un serveur d'authentification (20) configuré de manière à transmettre des informations d'authentification lesquelles correspondent à des informations permettant de recevoir une authentification en provenance d'un dispositif (40) effectuant une demande d'authentification, et un dispositif terminal (10) en mesure de mettre en oeuvre une communication à courte portée avec le dispositif de communication à courte portée (30) et en mesure de mettre en oeuvre une communication distincte de la communication à courte portée avec le serveur d'authentification (20) ;
dans lequel le dispositif de communication à courte portée (30) inclut :
un moyen de réception d'informations d'authentification de dispositif de communication à courte portée (302) configuré de manière à recevoir les informations d'authentification en provenance du dispositif terminal (10) ; et
un moyen de rétention d'informations d'authentification (303) configuré de manière à retenir les informations d'authentification reçues par le moyen de réception d'informations d'authentification de dispositif de communication à courte portée (302) ;
dans lequel le dispositif terminal (10) inclut :
un moyen de détermination de possibilité de communication (101) configuré de manière à déterminer si le dispositif terminal (10) est en mesure de communiquer avec le dispositif de communication à courte portée (30), et à déterminer si le dispositif terminal (10) est en mesure de communiquer avec le serveur d'authentification (20) ;
un moyen de demande de transmission d'informations d'authentification (102) configuré de manière à transmettre des informations d'identification correspondant au dispositif de communication à courte portée (30), au serveur d'authentification (20), et à effectuer une demande de transmission d'informations d'authentification, déclenchée par le moyen de détermination de possibilité de communication (101) lorsqu'il détermine que la communication entre le dispositif terminal (10) et le dispositif de communication à courte portée (30) est possible, et que la communication entre le dispositif terminal (10) et le serveur d'authentification (20) est possible ;
un moyen de réception d'informations d'authentification de dispositif terminal (103) configuré de manière à recevoir les informations d'authentification en provenance du serveur d'authentification (20), en réponse à la demande de transmission d'informations d'authentification en provenance du moyen de demande de transmission d'informations d'authentification (102) ; et
un moyen de transmission d'informations d'authentification de dispositif terminal (104) configuré de manière à transmettre les informations d'authentification, reçues par le moyen de réception d'informations d'authentification de dispositif terminal (103), au dispositif de communication à courte portée (30) ; et
dans lequel le serveur d'authentification (20) inclut :
un moyen de réception (201) configuré de manière à recevoir les informations d'identification correspondant au dispositif de communication à courte portée (30) et à recevoir la demande de transmission d'informations d'authentification ;
un moyen de génération d'informations d'authentification (202) configuré de manière à générer les informations d'authentification du dispositif de communication à courte portée (10) ; et
un moyen de transmission d'informations d'authentification de serveur d'authentification (207) configuré de manière à transmettre les informations d'authentification, générées par le moyen de génération d'informations d'authentification (202), au dispositif terminal (10), lorsque le moyen de réception (201) reçoit la demande de transmission d'informations d'authentification ;
le système de gestion d'informations d'authentification (1) comprenant en outre :
un moyen de détermination de mise à jour (203) configuré de manière à déterminer si une mise à jour des informations d'authentification est nécessaire ;
dans lequel le moyen de génération d'informations d'authentification (202) régénère des informations d'authentification du dispositif de communication à courte portée (30) lorsque le moyen de détermination de mise à jour détermine que la mise à jour est nécessaire ; et
dans lequel le moyen de demande de transmission d'informations d'authentification (102) transmet des informations d'authentification de ligne, lesquelles correspondent à des informations d'authentification d'une ligne destinée à être utilisée dans le cadre de la communication entre le dispositif terminal (10) et le serveur d'authentification (20), et soit un identifiant du dispositif de communication à courte portée (30), soit un identifiant du module d'authentification d'abonné monté sur le dispositif de communication à courte portée (30), en tant que les informations d'identification correspondant au dispositif de communication à courte portée (30), au serveur d'authentification (20) ;
dans lequel le serveur d'authentification (20) inclut en outre un moyen de détermination de possibilité de transmission (205) configuré de manière à déterminer si les informations d'authentification peuvent être transmises, sur la base de la correspondance des informations d'authentification de ligne, ou de leur association, avec soit l'identifiant du dispositif de communication à courte portée (30), soit l'identifiant du module d'authentification d'abonné monté sur le dispositif de communication à courte portée (30) ; et
dans lequel le moyen de détermination de mise à jour (203) est configuré de manière à déterminer si la mise à jour des informations d'authentification est nécessaire, uniquement lorsque le moyen de détermination de possibilité de transmission (205) détermine que la transmission est possible.

2. Système de gestion d'informations d'authentification (1) selon la revendication 1, dans lequel le moyen de détermination de mise à jour (203) détermine que la mise à jour des informations d'authentification est nécessaire lorsque les informations d'authentification ne sont pas mises à jour pendant une période donnée.

3. Système de gestion d'informations d'authentification (1) selon la revendication 1, comprenant en outre :
un moyen de détection de fraude (204) configuré de manière à détecter une utilisation frauduleuse des informations d'authentification ;
dans lequel le moyen de détermination de mise à jour (203) détermine qu'il est nécessaire de mettre à jour les informations d'authentification lorsque le moyen de détection de fraude (204) détecte l'utilisation frauduleuse.

4. Système de gestion d'informations d'authentification (1) selon la revendication 1,
dans lequel le dispositif terminal (10) inclut en outre un moyen de transmission d'informations d'association configuré de manière à transmettre des informations d'association, lesquelles correspondent à des informations indiquant une association des informations d'authentification de ligne et de l'identifiant du dispositif de communication à courte portée (30), ou de l'identifiant du module d'authentification d'abonné monté sur le dispositif de communication à courte portée (30), au serveur d'authentification (20) ;
dans lequel le serveur d'authentification (20) inclut en outre un moyen de réception d'informations d'association (201) configuré de manière à recevoir les informations d'association ; et
dans lequel le moyen de détermination de possibilité de transmission (205) détermine que la transmission est possible si les informations d'association sont reçues par le moyen de réception d'informations d'association lorsque les informations d'authentification de ligne et l'identifiant du dispositif de communication à courte portée (30), ou l'identifiant du module d'authentification d'abonné monté sur le dispositif de communication à courte portée (30), ne sont pas associés.

5. Système de gestion d'informations d'authentification (1) selon la revendication 4,
dans lequel le serveur d'authentification (20) inclut en outre un moyen de rétention d'informations (206) configuré de manière à retenir des informations obtenues en associant les informations d'authentification de ligne et l'identifiant du dispositif de communication à courte portée (30), ou l'identifiant du module d'authentification d'abonné monté sur le dispositif de communication à courte portée (30), lorsque le moyen de détermination de possibilité de transmission (205) reçoit les informations d'association des informations d'authentification de ligne et l'identifiant du dispositif de communication à courte portée (30), ou l'identifiant du module d'authentification d'abonné monté sur le dispositif de communication à courte portée, en provenance du dispositif terminal (30) ; et
dans lequel le moyen de détermination de possibilité de transmission (206) détermine que la transmission est possible lorsque le moyen de rétention d'informations (206) retient les informations obtenues en associant les informations d'authentification de ligne et l'identifiant du dispositif de communication à courte portée (30), ou l'identifiant du module d'authentification d'abonné monté sur le dispositif de communication à courte portée (30), si les informations d'authentification de ligne et l'identifiant du dispositif de communication à courte portée (30), ou l'identifiant du module d'authentification d'abonné monté sur le dispositif de communication à courte portée (30), ne sont pas associés.
